# EUROPEAN PATENT APPLICATION

(11) **EP 4 801 083 A1**
(43) Date of publication of application: **02.09.2026**
(21) Application number: 24905574.0
(22) Date of filing: 12.08.2024
(51) Int. Cl.: H04W 4/90

(54) **COMMUNICATION METHOD AND RELATED APPARATUS**

(30) Priority: 18.12.2023 CN 202311751443
(71) Applicant: Honor Device Co., Ltd., Shenzhen, Guangdong 518040 (CN)
(72) Inventor: ZHANG, Mingzhu, Shenzhen, Guangdong 518040 (CN)
(74) Representative: Goddar, Heinz J.
(86) International application number: PCT/CN2024/111345
(87) International publication number: WO 2025/130079

(57) **Abstract**

Embodiments of this application provide a communication method and a related apparatus. The method is performed by a communication apparatus. In the method, configuration information is obtained, where the configuration information indicates a first resource, and a first object is mapped to the first resource based on delay information of the first object. In other words, whether to map the first object to the first resource is determined through the delay information of the first object, so that resource allocation performed on an emergency service having a high delay requirement corresponding to the first object may be implemented.

## Description

This application claims priority to Chinese Patent Application No. 202311751443.X, filed with the National Intellectual Property Administration on December 18, 2023 and entitled "COMMUNICATION METHOD AND RELATED APPARATUS", which is incorporated by reference in its entirety.

### TECHNICAL FIELD

This application relates to the communication field, and in particular, to a communication method and a related apparatus.

### BACKGROUND

Wireless communication may be transmission communication between two or more communication nodes without being transmitted through a conductor or a cable, or transmitted through an air interface. For example, the communication node includes a network device and a terminal device. Generally, the terminal device may access the network device, and receive scheduling and indication information of the network device, to implement wireless communication.

Currently, in a communication system, after receiving an uplink grant (UL grant) resource sent by a base station, a media access control (media access control, MAC) entity on a terminal side triggers logical channel prioritization (logical channel prioritization, LCP). The MAC entity on the terminal side allocates resources to each logical channel (logic channel, LCH) based on a priority determined by the LCP. Specifically, a resource allocation operation includes two rounds: in a first round, radio resources are sequentially allocated, based on a descending order of an LCH priority, to logical channels that have data to be transmitted and whose average data traffic does not satisfy a prioritized bit rate (prioritized bit rate, PBR) requirement of the LCH; and in a second round, if there are remaining resources, resource allocation is still performed based on the LCH priority, until data transmission of the LCH is completed or all uplink grant resources are allocated.

### SUMMARY

Some embodiments of this application provide a communication method and a related apparatus, so that resource allocation performed on emergency service data having a high delay requirement corresponding to a first object may be implemented.

A first aspect of embodiments of this application provides a communication method. The method is performed by a communication apparatus, or the method is performed by some components (for example, a processor, a chip, or a chip system) in the communication apparatus, or the method may be implemented by a logical module or software that can implement all or some functions of the communication apparatus. The communication apparatus may be a terminal device. In the first aspect and possible implementations thereof, descriptions are provided by using an example in which the communication method is performed by the communication apparatus. In the method, configuration information is obtained, where the configuration information indicates a first resource, and a first object is mapped to the first resource based on delay information of the first object.

In some existing technologies, a resource allocation manner for an LCH is monotonous, and cannot adapt to an emergency service scenario. In embodiments of this application, whether to map the first object to the first resource is determined through the delay information of the first object, so that resource allocation performed on emergency service data having a high delay requirement corresponding to the first object may be implemented.

Optionally, in a possible implementation of the first aspect, the delay information includes a remaining duration and/or a buffering duration.

In this possible implementation, the delay information may be determined not only from a perspective of the remaining duration but also from a perspective of the buffering duration, thereby improving flexibility of a manner for determining the delay information, to adapt to different application scenarios.

Optionally, in a possible implementation of the first aspect, the first object includes one or more of the following types: a protocol data unit (protocol data unit, PDU), a PDU set (PDU set), a service data unit (service Data Unit, SDU), a MAC entity, a packet data convergence protocol (packet data convergence protocol, PDCP) entity, a radio link control (radio link control, RLC) entity, an LCH, a logical channel group (logical channel group, LCG), a data radio bearer (data radio bearer, DRB), a quality of service (quality of service, QoS) flow, or the like.

In this possible implementation, different object types may be set based on an actual requirement, to implement resource allocation of delay data from different granularities.

Optionally, in a possible implementation of the first aspect, the foregoing step of mapping a first object to the first resource based on delay information of the first object includes one or more of the following:
mapping the first object to the first resource when the remaining duration of the first object is less than or equal to a first threshold;
mapping the first object to the first resource when the buffering duration of the first object is greater than or equal to a second threshold;
mapping the first object to the first resource when the remaining duration of the first object is less than or equal to the first threshold and is greater than or equal to a third threshold; or
mapping the first object to the first resource when the buffering duration of the first object is greater than or equal to the second threshold and is less than or equal to a fourth threshold.

It may be understood that, the mapping the first object to the first resource when a certain situation is satisfied in each of the foregoing descriptions may not refer to that the first object is mapped to the first resource as long as the situation is satisfied, and may further include that the first object is mapped to the first resource only when other situations are satisfied. In addition, the mapping the first object to the first resource may be mapping some sub-objects in the first object to the first resource.

In the foregoing possible implementation, an object whose remaining duration is small (for example, the foregoing first object whose remaining duration is less than or equal to the first threshold) is mapped, or an object whose buffering duration is long (for example, the foregoing first object whose buffering duration is greater than or equal to the second threshold) is mapped, so that not only rapid resource allocation of the delay data may be improved, but also buffering congestion may be reduced. Optionally, in a possible implementation of the first aspect, the first object includes a plurality of sub-objects;
the mapping a first object to the first resource based on delay information of the first object includes one or more of the following:
mapping a sub-object satisfying a preset condition to the first resource; and
the preset condition includes one or more of the following:
   a preset quantity, where the preset quantity is a preset value or is related to sorting of delay information corresponding to the plurality of sub-objects;
   the remaining duration being the smallest; or
   the buffering duration being the largest.

In this possible implementation, when the first object includes the plurality of sub-objects, resources may be preferentially allocated to urgent data in a manner of a smallest remaining duration, a largest buffering duration, or TOP-K.

Optionally, in a possible implementation of the first aspect, the foregoing step further includes: obtaining first indication information, where the first indication information indicates that the first object is capable of using a preset threshold or a first mapping rule, the preset threshold is related to the delay information, and the first mapping rule is a rule for mapping the first object to the first resource based on the delay information.

In this possible implementation, object granularity may be indicated through the first indication information, to determine which objects are capable of being mapped to the first resource based on the delay information, thereby improving resource allocation efficiency.

Optionally, in a possible implementation of the first aspect, the first indication information includes a bit corresponding to the first object, a value of the bit is a first value or a second value, the first value corresponds to that the first object is capable of mapping the first object to the first resource based on the delay information, and the second value corresponds to that the first object is not capable of mapping the first object to the first resource based on the delay information.

In this possible implementation, the bit may be used to indicate which objects are capable of being mapped to the first resource based on the delay information and which objects are not capable of being mapped to the first resource based on the delay information. Therefore, flexible resource allocation may be performed based on the object granularity.

Optionally, in a possible implementation of the first aspect, the first indication information specifically indicates an identifier of the first object.

In this possible implementation, an object identifier may be used to indicate which objects are capable of being mapped to the first resource based on the delay information and which objects are not capable of being mapped to the first resource based on the delay information. Therefore, flexible resource allocation may be performed based on the object granularity.

Optionally, in a possible implementation of the first aspect, the foregoing step further includes: obtaining second indication information, where the second indication information indicates that a preset threshold or a second mapping rule is capable of being used, the preset threshold is related to the delay information, the second mapping rule is a rule for mapping a second object to the first resource based on the delay information, and the second object includes the first object; and
the mapping a first object to the first resource based on delay information of the first object includes:
mapping the first object to the first resource based on the delay information of the first object when the second indication information is obtained.

In this possible implementation, apparatus granularity may be indicated through the second indication information, to determine which apparatuses are capable of mapping the object to the first resource based on the delay information, thereby improving the resource allocation efficiency.

Optionally, in a possible implementation of the first aspect, the first object includes the plurality of sub-objects, and the plurality of sub-objects correspond to different preset thresholds.

In this possible implementation, the plurality of sub-objects correspond to different preset thresholds, so that granularity of resource allocation may be improved, and scheduling performance may be improved.

Optionally, in a possible implementation of the first aspect, the configuration information includes one or more of the following: the first indication information, the second indication information, and the preset threshold associated with the first resource, the preset threshold includes a corresponding threshold when the delay information is the remaining duration and/or a corresponding threshold when the delay information is the buffering duration, the preset threshold associated with the first resource is related to delay information of an object associated with the first resource, and the object associated with the first resource includes the first object. In this possible implementation, a parameter required in a mapping process may be indicated through the configuration information, to reduce redundant signaling overhead.

Optionally, in a possible implementation of the first aspect, the first object corresponds to a plurality of candidate resources, the plurality of candidate resources include the first resource and a second resource, and the preset threshold associated with the first resource and a preset threshold associated with the second resource satisfy the preset condition. For example, the preset threshold associated with the first resource is related to the delay information of the object associated with the first resource, the preset threshold associated with the second resource is related to the delay information of the object associated with the second resource, and the preset threshold includes the corresponding threshold when the delay information is the remaining duration and/or the corresponding threshold when the delay information is the buffering duration.

In this possible implementation, when the first object corresponds to the plurality of candidate resources, thresholds associated with the plurality of candidate resources may be compared, thereby determining the first resource to which the first object is mapped.

Optionally, in a possible implementation of the first aspect, the preset threshold associated with the first resource and the preset threshold associated with the second resource satisfying the preset condition includes:
a first threshold associated with the first resource being less than a first threshold associated with the second resource; or
a second threshold associated with the first resource being greater than a second threshold associated with the second resource.

In this possible implementation, a resource whose first threshold is small or whose second threshold is large may be selected as a resource to which the first object is mapped, so that resource waste may be reduced.

Optionally, in a possible implementation of the first aspect, the first resource is further associated with the object identifier, and the object identifier includes the identifier of the first object.

In this possible implementation, the first resource is further associated with the object identifier, so that it may be determined which objects are mapped to the first resource, thereby improving the resource allocation efficiency.

Optionally, in a possible implementation of the first aspect, the first resource is related to delay-sensitive data and/or the first object is related to the delay-sensitive data.

In this possible implementation, the method may be applied to a resource allocation scenario of the delay-sensitive data.

A second aspect of embodiments of this application provides a communication method. The method is performed by a communication apparatus, or the method is performed by some components (for example, a processor, a chip, or a chip system) in the communication apparatus, or the method may be implemented by a logical module or software that can implement all or some functions of the communication apparatus. The communication apparatus may be a network device. In the second aspect and possible implementations thereof, descriptions are provided by using an example in which the communication method is performed by the communication apparatus. In the method, configuration information is sent, where the configuration information indicates a first resource, and indication information is sent, where the indication information indicates to map a first object to the first resource based on delay information of the first object.

In embodiments of this application, whether to map the first object to the first resource is determined by configuring the delay information of the first object to a terminal device through the indication information, so that resource allocation performed on emergency service data having a high delay requirement corresponding to the first object may be implemented.

Optionally, in a possible implementation of the second aspect, the delay information includes a remaining duration and/or a buffering duration.

In this possible implementation, the delay information may be determined not only from a perspective of the remaining duration but also from a perspective of the buffering duration, thereby improving flexibility of a manner for determining the delay information, to adapt to different application scenarios.

Optionally, in a possible implementation of the second aspect, the first object includes one or more of the following types: a PDU, a PDU set, an SDU, a MAC entity, a PDCP entity, an RLC entity, an LCH, an LCG, a DRB, or a QoS flow.

In this possible implementation, different object types may be set based on an actual requirement, to implement resource allocation of delay data from different granularities.

Optionally, in a possible implementation of the second aspect, the mapping a first object to the first resource based on delay information of the first object includes one or more of the following:
mapping the first object to the first resource when the remaining duration of the first object is less than or equal to a first threshold;
mapping the first object to the first resource when the buffering duration of the first object is greater than or equal to a second threshold;
mapping the first object to the first resource when the remaining duration of the first object is less than or equal to the first threshold and is greater than or equal to a third threshold; or
mapping the first object to the first resource when the buffering duration of the first object is greater than or equal to the second threshold and is less than or equal to a fourth threshold.

In this possible implementation, an object whose remaining duration is small is mapped, or an object whose buffering duration is long is mapped, so that not only rapid resource allocation of the delay data may be improved, but also buffering congestion may be reduced.

Optionally, in a possible implementation of the second aspect, the first object includes a plurality of sub-objects;
the mapping a first object to the first resource based on delay information of the first object includes one or more of the following:
mapping a sub-object satisfying a preset condition to the first resource; and
the preset condition includes one or more of the following:
   a preset quantity, where the preset quantity is a preset value or is related to sorting of delay information corresponding to the plurality of sub-objects;
   the remaining duration being the smallest; or
   the buffering duration being the largest.

In this possible implementation, when the first object includes the plurality of sub-objects, resources may be preferentially allocated to urgent data in a manner of a smallest remaining duration, a largest buffering duration, or TOP-K.

Optionally, in a possible implementation of the second aspect, the indication information specifically indicates that the first object is capable of using a preset threshold or a first mapping rule, where the preset threshold is related to the delay information, and the first mapping rule is a rule for mapping the first object to the first resource based on the delay information.

In this possible implementation, object granularity may be indicated through the indication information, to determine which objects are capable of being mapped to the first resource based on the delay information, thereby improving resource allocation efficiency.

Optionally, in a possible implementation of the second aspect, the indication information includes a bit corresponding to the first object, a value of the bit is a first value or a second value, the first value corresponds to that the first object is capable of mapping the first object to the first resource based on the delay information, and the second value corresponds to that the first object is not capable of mapping the first object to the first resource based on the delay information.

In this possible implementation, the bit may be used to indicate which objects are capable of being mapped to the first resource based on the delay information and which objects are not being capable of being mapped to the first resource based on the delay information. Therefore, flexible resource allocation may be performed based on the object granularity.

Optionally, in a possible implementation of the second aspect, the indication information further indicates delay-sensitive data associated with the first resource.

In this possible implementation, subsequent object mapping corresponding to the first resource may be triggered by indicating the delay-sensitive data may be associated with the first resource.

Optionally, in a possible implementation of the second aspect, the indication information specifically indicates an identifier of the first object.

In this possible implementation, an object identifier may be used to indicate which objects are capable of being mapped to the first resource based on the delay information and which objects are not capable of being mapped to the first resource based on the delay information. Therefore, flexible resource allocation may be performed based on the object granularity.

Optionally, in a possible implementation of the second aspect, the indication information is specifically used for being capable of using a preset threshold or a second mapping rule, the preset threshold is related to the delay information, the second mapping rule is a rule for mapping a second object to the first resource based on the delay information, and the second object includes the first object.

In this possible implementation, apparatus granularity may be indicated through the indication information, to determine which apparatuses are capable of mapping the object to the first resource based on the delay information, thereby improving the resource allocation efficiency.

Optionally, in a possible implementation of the second aspect, the first object includes the plurality of sub-objects, and the plurality of sub-objects correspond to different preset thresholds.

In this possible implementation, the plurality of sub-objects correspond to different preset thresholds, so that granularity of resource allocation may be improved, and scheduling performance may be improved.

Optionally, in a possible implementation of the second aspect, the configuration information includes one or more of the following: the first indication information, the second indication information, and the preset threshold associated with the first resource, the preset threshold includes a corresponding threshold when the delay information is the remaining duration and/or a corresponding threshold when the delay information is the buffering duration, the preset threshold associated with the first resource is related to delay information of an object associated with the first resource, and the object associated with the first resource includes the first object. In this possible implementation, a parameter required in a mapping process may be indicated through the configuration information, to reduce redundant signaling overhead.

Optionally, in a possible implementation of the second aspect, the first object corresponds to a plurality of candidate resources, the plurality of candidate resources include the first resource and a second resource, the preset threshold associated with the first resource and a preset threshold associated with the second resource satisfy the preset condition, the preset threshold associated with the first resource is related to the delay information of the object associated with the first resource, the preset threshold associated with the second resource is related to the delay information of the object associated with the second resource, and the preset threshold includes the corresponding threshold when the delay information is the remaining duration and/or the corresponding threshold when the delay information is the buffering duration.

In this possible implementation, when the first object corresponds to the plurality of candidate resources, thresholds associated with the plurality of candidate resources may be compared, thereby determining the first resource to which the first object is mapped.

Optionally, in a possible implementation of the second aspect, the preset threshold associated with the first resource and the preset threshold associated with the second resource satisfying the preset condition includes:
a first threshold associated with the first resource being less than a first threshold associated with the second resource; or
a second threshold associated with the first resource being greater than a second threshold associated with the second resource.

In this possible implementation, a resource whose first threshold is small or whose second threshold is large may be selected as a resource to which the first object is mapped, so that resource waste may be reduced.

Optionally, in a possible implementation of the second aspect, the first resource is further associated with the object identifier, and the object identifier includes the identifier of the first object.

In this possible implementation, the first resource is further associated with the object identifier, so that it may be determined which objects are mapped to the first resource, thereby improving the resource allocation efficiency.

Optionally, in a possible implementation of the second aspect, the first resource is related to the delay-sensitive data and/or the first object is related to the delay-sensitive data.

In this possible implementation, the method may be applied to a resource allocation scenario of the delay-sensitive data.

A third aspect of embodiments of this application provides a communication apparatus, and the communication apparatus may be a terminal device. The communication apparatus includes a transceiver unit and a processing unit.

The transceiver unit is configured to obtain configuration information, where the configuration information indicates a first resource.

The processing unit is configured to map a first object to the first resource based on delay information of the first object.

Optionally, in a possible implementation of the third aspect, the delay information includes a remaining duration and/or a buffering duration.

Optionally, in a possible implementation of the third aspect, the first object includes one or more of the following types: a PDU, a PDU set, an SDU, a MAC entity, a PDCP entity, an RLC entity, an LCH, an LCG, a DRB, or a QoS flow.

Optionally, in a possible implementation of the third aspect, the processing unit is specifically configured to perform one or more of the following:
mapping the first object to the first resource when the remaining duration of the first object is less than or equal to a first threshold;
mapping the first object to the first resource when the buffering duration of the first object is greater than or equal to a second threshold;
mapping the first object to the first resource when the remaining duration of the first object is less than or equal to the first threshold and is greater than or equal to a third threshold; or
mapping the first object to the first resource when the buffering duration of the first object is greater than or equal to the second threshold and is less than or equal to a fourth threshold.

Optionally, in a possible implementation of the third aspect, the first object includes a plurality of sub-objects.

Optionally, in a possible implementation of the third aspect, the processing unit is specifically configured to perform one or more of the following: mapping a sub-object satisfying a preset condition to the first resource; and
the preset condition includes one or more of the following:
a preset quantity, where the preset quantity is a preset value or is related to sorting of delay information corresponding to the plurality of sub-objects;
the remaining duration being the smallest; or
the buffering duration being the largest.

Optionally, in a possible implementation of the third aspect, the transceiver unit is further configured to obtain first indication information, where the first indication information indicates that the first object is capable of using a preset threshold or a first mapping rule, the preset threshold is related to the delay information, and the first mapping rule is a rule for mapping the first object to the first resource based on the delay information.

Optionally, in a possible implementation of the third aspect, the first indication information includes a bit corresponding to the first object, a value of the bit is a first value or a second value, the first value corresponds to that the first object is capable of mapping the first object to the first resource based on the delay information, and the second value corresponds to that the first object is not capable of mapping the first object to the first resource based on the delay information.

Optionally, in a possible implementation of the third aspect, the first indication information specifically indicates an identifier of the first object.

Optionally, in a possible implementation of the third aspect, the transceiver unit is further configured to obtain second indication information, where the second indication information indicates that a preset threshold or a second mapping rule is capable of being used, the preset threshold is related to the delay information, the second mapping rule is a rule for mapping a second object to the first resource based on the delay information, and the second object includes the first object.

Optionally, in a possible implementation of the third aspect, the processing unit is specifically configured to map the first object to the first resource based on the delay information of the first object when the second indication information is obtained.

Optionally, in a possible implementation of the third aspect, the first object includes the plurality of sub-objects, and the plurality of sub-objects correspond to different preset thresholds.

Optionally, in a possible implementation of the third aspect, the configuration information includes one or more of the following: the first indication information, the second indication information, and the preset threshold associated with the first resource, the preset threshold includes a corresponding threshold when the delay information is the remaining duration and/or a corresponding threshold when the delay information is the buffering duration, the preset threshold associated with the first resource is related to delay information of an object associated with the first resource, and the object associated with the first resource includes the first object.

Optionally, in a possible implementation of the third aspect, the first object corresponds to a plurality of candidate resources, the plurality of candidate resources include the first resource and a second resource, the preset threshold associated with the first resource and a preset threshold associated with the second resource satisfy the preset condition, the preset threshold associated with the first resource is related to the delay information of the object associated with the first resource, the preset threshold associated with the second resource is related to the delay information of the object associated with the second resource, and the preset threshold includes the corresponding threshold when the delay information is the remaining duration and/or the corresponding threshold when the delay information is the buffering duration.

Optionally, in a possible implementation of the third aspect, the preset threshold associated with the first resource and the preset threshold associated with the second resource satisfying the preset condition includes:
a first threshold associated with the first resource being less than a first threshold associated with the second resource; or
a second threshold associated with the first resource being greater than a second threshold associated with the second resource.

Optionally, in a possible implementation of the third aspect, the first resource is further associated with the object identifier, and the object identifier includes the identifier of the first object.

Optionally, in a possible implementation of the third aspect, the first resource is related to delay-sensitive data and/or the first object is related to the delay-sensitive data.

A fourth aspect of embodiments of this application provides a communication apparatus, and the communication apparatus may be a network device. The communication apparatus includes a transceiver unit.

The transceiver unit is configured to send configuration information, where the configuration information indicates a first resource.

The transceiver unit is further configured to send indication information, where the indication information indicates to map a first object to the first resource based on delay information of the first object.

Optionally, in a possible implementation of the fourth aspect, the delay information includes a remaining duration and/or a buffering duration.

Optionally, in a possible implementation of the fourth aspect, the first object includes one or more of the following types: a PDU, a PDU set, an SDU, a MAC entity, a PDCP entity, an RLC entity, an LCH, an LCG, a DRB, or a QoS flow.

Optionally, in a possible implementation of the fourth aspect, the mapping a first object to the first resource based on delay information of the first object includes one or more of the following:
mapping the first object to the first resource when the remaining duration of the first object is less than or equal to a first threshold;
mapping the first object to the first resource when the buffering duration of the first object is greater than or equal to a second threshold;
mapping the first object to the first resource when the remaining duration of the first object is less than or equal to the first threshold and is greater than or equal to a third threshold; or
mapping the first object to the first resource when the buffering duration of the first object is greater than or equal to the second threshold and is less than or equal to a fourth threshold.

Optionally, in a possible implementation of the fourth aspect, the first object includes a plurality of sub-objects;
the mapping a first object to the first resource based on delay information of the first object includes one or more of the following:
mapping a sub-object satisfying a preset condition to the first resource; and
the preset condition includes one or more of the following:
   a preset quantity, where the preset quantity is a preset value or is related to sorting of delay information corresponding to the plurality of sub-objects;
   the remaining duration being the smallest; or
   the buffering duration being the largest.

Optionally, in a possible implementation of the fourth aspect, the indication information specifically indicates that the first object is capable of using a preset threshold or a first mapping rule, where the preset threshold is related to the delay information, and the first mapping rule is a rule for mapping the first object to the first resource based on the delay information.

Optionally, in a possible implementation of the fourth aspect, the indication information includes a bit corresponding to the first object, a value of the bit is a first value or a second value, the first value corresponds to that the first object is capable of mapping the first object to the first resource based on the delay information, and the second value corresponds to that the first object is not capable of mapping the first object to the first resource based on the delay information.

Optionally, in a possible implementation of the fourth aspect, the indication information specifically indicates an identifier of the first object.

Optionally, in a possible implementation of the fourth aspect, the indication information further indicates delay-sensitive data associated with the first resource.

Optionally, in a possible implementation of the fourth aspect, the indication information is specifically used for being capable of using a preset threshold or a second mapping rule, the preset threshold is related to the delay information, the second mapping rule is a rule for mapping a second object to the first resource based on the delay information, and the second object includes the first object.

Optionally, in a possible implementation of the fourth aspect, the first object includes the plurality of sub-objects, and the plurality of sub-objects correspond to different preset thresholds.

Optionally, in a possible implementation of the fourth aspect, the configuration information includes one or more of the following: the first indication information, the second indication information, and the preset threshold associated with the first resource, the preset threshold includes a corresponding threshold when the delay information is the remaining duration and/or a corresponding threshold when the delay information is the buffering duration, the preset threshold associated with the first resource is related to delay information of an object associated with the first resource, and the object associated with the first resource includes the first object. In this possible implementation, a parameter required in a mapping process may be indicated through the configuration information, to reduce redundant signaling overhead.

Optionally, in a possible implementation of the fourth aspect, the first object corresponds to a plurality of candidate resources, the plurality of candidate resources include the first resource and a second resource, the preset threshold associated with the first resource and a preset threshold associated with the second resource satisfy the preset condition, the preset threshold associated with the first resource is related to the delay information of the object associated with the first resource, the preset threshold associated with the second resource is related to the delay information of the object associated with the second resource, and the preset threshold includes the corresponding threshold when the delay information is the remaining duration and/or the corresponding threshold when the delay information is the buffering duration.

Optionally, in a possible implementation of the fourth aspect, the preset threshold associated with the first resource and the preset threshold associated with the second resource satisfying the preset condition includes:
a first threshold associated with the first resource being less than a first threshold associated with the second resource; or
a second threshold associated with the first resource being greater than a second threshold associated with the second resource.

Optionally, in a possible implementation of the fourth aspect, the first resource is further associated with the object identifier, and the object identifier includes the identifier of the first object.

Optionally, in a possible implementation of the fourth aspect, the first resource is related to the delay-sensitive data and/or the first object is related to the delay-sensitive data.

A fifth aspect of embodiments of this application provides a communication apparatus, the apparatus includes at least one processor, the at least one processor is coupled to a memory, the memory is configured to store a program or instructions, and the at least one processor is configured to execute the program or the instructions, so that the apparatus implements the method according to any one of possible implementations of the foregoing first aspect.

A sixth aspect of embodiments of this application provides a communication apparatus, the apparatus includes at least one processor, the at least one processor is coupled to a memory, the memory is configured to store a program or instructions, and the at least one processor is configured to execute the program or the instructions, so that the apparatus implements the method according to any one of possible implementations of the foregoing second aspect.

A seventh aspect of embodiments of this application provides a communication apparatus, the apparatus includes at least one logic circuit and an input/output interface, and the logic circuit is configured to perform the method according to any one of possible implementations of the foregoing first aspect.

An eighth aspect of embodiments of this application provides a communication apparatus, the apparatus includes at least one logic circuit and an input/output interface, and the logic circuit is configured to perform the method according to any one of possible implementations of the foregoing second aspect.

The foregoing communication apparatus may be a terminal device, a network device, or a chip.

A ninth aspect of embodiments of this application provides a communication system, the communication system includes a terminal device according to any one of possible implementations of the third aspect and a network device according to any one of possible implementations of the fourth aspect, or includes a terminal device according to any one of possible implementations of the fifth aspect and a network device according to any one of possible implementations of the sixth aspect, or includes a terminal device according to any one of possible implementations of the seventh aspect and a network device according to any one of possible implementations of the eighth aspect.

A tenth aspect of embodiments of this application provides a computer-readable storage medium, the storage medium is configured to store one or more computer executable instructions, and when the computer executable instructions are executed by a processor, the processor performs the method according to any one of possible implementations of any one of the first aspect or the second aspect.

An eleventh aspect of embodiments of this application provides a computer program product (or referred to as a computer program), and when the computer program in the computer program product is executed by a processor, the processor performs the method according to any one of possible implementations of any one of the first aspect or the second aspect.

A twelfth aspect of embodiments of this application provides a chip system, and the chip system includes at least one processor, configured to support a communication apparatus to implement the method according to any one of possible implementations of any one of the first aspect or the second aspect.

In a possible design, the chip system may further include a memory, and the memory is configured to store program instructions and data necessary for the communication apparatus. The chip system may include a chip, or may include a chip and another discrete device. Optionally, the chip system further includes an interface circuit, and the interface circuit provides program instructions and/or data for at least one processor.

For a technical effect brought by any one of the design manners of the third aspect to the twelfth aspect, refer to technical effects brought by the different design manners of the first aspect and the second aspect. Details are not described herein again.

### BRIEF DESCRIPTION OF DRAWINGS

FIG. 1A is a diagram of a communication system according to this application;
FIG. 1B is another diagram of a communication system according to this application;
FIG. 1C is another diagram of a communication system according to this application;
FIG. 2 is a schematic flowchart of a communication method according to this application;
FIG. 3A is a diagram of a mapping process between an object and a resource according to this application;
FIG. 3B is a diagram of another mapping process between an object and a resource according to this application;
FIG. 4A is a diagram of another mapping process between an object and a resource according to this application;
FIG. 4B is a diagram of another mapping process between an object and a resource according to this application;
FIG. 5 is another schematic flowchart of a communication method according to this application;
FIG. 6 is another schematic flowchart of a communication method according to this application; and
FIG. 7 to FIG. 10 are several diagrams of a communication apparatus according to this application.

### DESCRIPTION OF EMBODIMENTS

The following clearly and completely describes technical solutions in embodiments of this application with reference to the accompanying drawings in embodiments of this application.

First, some terms in embodiments of this application are explained and described, to facilitate understanding of a person skilled in the art.

### 1. Configuration and pre-configuration

Configuration refers to that a network device/server sends configuration information of some parameters or values of the parameters to a terminal through a message or signaling, so that the terminal determines a communication parameter or a resource during transmission based on the values or the information. Similar to the configuration, pre-configuration may be parameter information or a parameter value pre-negotiated by the network device/server with a terminal device, may be parameter information or a parameter value that is specified in a standard protocol and that is used by a base station/network device or the terminal device, or may be parameter information or a parameter value pre-stored in the base station/server or the terminal device. This is not limited in this application. Further, these values and parameters may be changed or updated.

2. In this application, "used for indicating" may include used for direct indication and used for indirect indication. When it is described that indication information indicates A, it may be understood that the indication information carries A, directly indicates A, or indirectly indicates A.

In this application, information indicated by the indication information is referred to as to-be-indicated information. In a specific implementation process, there are a plurality of manners of indicating the to-be-indicated information, for example, but not limited to, the to-be-indicated information may be directly indicated, for example, the to-be-indicated information itself or an index of the to-be-indicated information. The to-be-indicated information may also be indirectly indicated by indicating other information, where there is an association relationship between the other information and the to-be-indicated information. Alternatively, only a part of the to-be-indicated information may be indicated, and another part of the to-be-indicated information is known or specified in advance. For example, indication of specific information may also be implemented by using an arrangement sequence of each piece of information that is specified in advance (for example, specified in a protocol), thereby reducing indication overhead to some extent.

The to-be-indicated information may be sent together as a whole, or may be divided into a plurality of pieces of sub-information to be separately sent, and sending periods and/or sending timing of the plurality of pieces of sub-information may be the same, or may be different. A specific sending method is not limited in this application. The sending periods and/or sending timing of the plurality of pieces of sub-information may be pre-defined, for example, pre-defined according to a protocol, or may be configured by a transmit end device by sending the configuration information to a receive end device. The configuration information may include, for example, but is not limited to, one or a combination of at least two of radio resource control signaling, media access control (media access control, MAC) layer signaling, and physical layer signaling. The radio resource control signaling includes, for example, packet radio resource control (radio resource control, RRC) signaling, the MAC layer signaling includes, for example, a MAC control element (control element, CE), and the physical layer signaling includes, for example, downlink control information (downlink control information, DCI).

3. In embodiments of this application, ordinal words such as "first" and "second" are used to distinguish between a plurality of objects, and are not used to limit sequences, time sequences, priorities, or importance degrees of the plurality of objects.

4. A mapping limitation for mapping an existing logical channel to an uplink grant

The existing mapping limitation includes one or more of the following:
allowed SCS-List, configured to set a sub-carrier spacing allowed for transmission;
maxPUSCH-Duration, which sets the largest PUSCH duration allowed for transmission;
   - configuredGrantType1Allowed, which sets whether a configured authorization type 1 may be used for transmission;
   - allowedServingCells, which sets a cell allowed for transmission;
   - allowedCG-List, which sets an authorization used for allowing configuration of transmission;
   - allowedPHY PriorityIndex, which sets an allowed PHY priority index of a dynamic authorization used for transmission; and
   - allowedHARQ-mode, which sets a UL HARQ mode allowed for transmission.

5. Mapping rules provided in an existing standard protocol are as follows:
1> select the logical channels for each UL grant that satisfy all the following conditions:
   2> the set of allowed Subcarrier Spacing index values in allowedSCS-List, if configured, includes the Subcarrier Spacing index associated to the UL grant; and
   2> maxPUSCH-Duration, if configured, is larger than or equal to the PUSCH transmission duration associated to the UL grant; and
   2> configuredGrantType1Allowed, if configured, is set to true in case the UL grant is a Configured Grant Type 1; and
   2> allowedServingCells, if configured, includes the Cell information associated to the UL grant. Does not apply to logical channels associated with a DRB configured with PDCP duplication within the same MAC entity (i.e. CA duplication) when CA duplication is deactivated for this DRB in this MAC entity; and
   2> allowedCG-List, if configured, includes the configured grant index associated to the UL grant; and
   2> allowedPHY-PriorityIndex, if configured, includes the priority index (as specified in clause 9 of TS 38.213 [6]) associated to the dynamic UL grant; and
   2> allowedHARQ-mode, if configured, includes the allowed UL HARQ mode for the HARQ process associated to the UL grant.

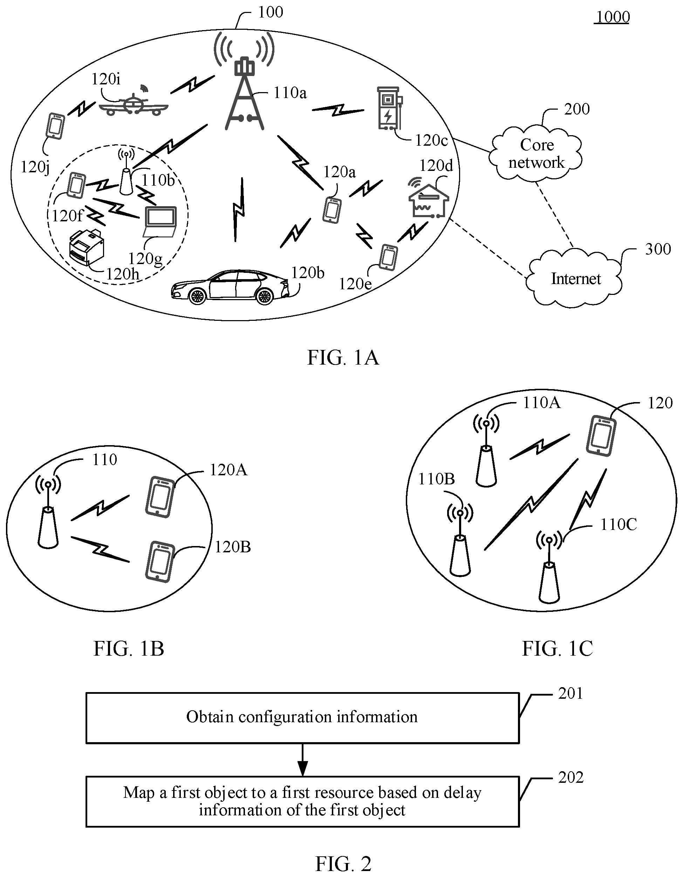

FIG. 1A is a diagram of an architecture of a communication system 1000 to which an embodiment of this application is applied. As shown in FIG. 1A, the communication system includes a radio access network (radio access network, RAN) 100 and a core network 200. Optionally, the communication system 1000 may further include the Internet 300. The RAN 100 includes at least one RAN node (110a and 110b shown in FIG. 1A, collectively referred to as 110), and may further include at least one terminal (120a to 120j shown in FIG. 1A, collectively referred to as 120). The RAN 100 may further include another RAN node such as a wireless relay device and/or a wireless backhaul device (not shown in FIG. 1A). The terminal 120 is connected to the RAN node 110 in a wireless manner, and the RAN node 110 is connected to the core network 200 in a wireless or wired manner. A core network device in the core network 200 and the RAN node 110 in the RAN 100 may be independent different physical devices, or may be a same physical device in which a logical function of the core network device and a logical function of the RAN node are integrated. Terminals and the RAN nodes may be connected to each other in a wired or wireless manner.

The RAN 100 may be an evolved universal terrestrial radio access (evolved universal terrestrial radio access, E-UTRA) system, an NR system, or a future radio access system defined in 3GPP. The RAN 100 may further include two or more different radio access systems. The RAN 100 may alternatively be an open RAN (open RAN, O-RAN).

The RAN node is also referred to as a radio access network device, a RAN entity, or an access node, and is configured to help the terminal to access the communication system in a wireless manner. In an application scenario, the RAN node may be a base station (base station), an evolved base station (evolved NodeB, NodeB), a transmission reception point (transmission reception point, TRP), a next generation base station (next generation NodeB, gNB) in a 5th generation (5th generation, 5G) mobile communication system, a next generation base station in a 6th generation (6th generation, 6G) mobile communication system, or a base station in a future mobile communication system. The RAN node may be a macro base station (for example, 110a in FIG. 1A), a micro base station or an indoor station (for example, 110b in FIG. 1A), or a relay node or a promoter node.

In another application scenario, a plurality of RAN nodes may cooperate to help the terminal to implement radio access, and different RAN nodes respectively implement some functions of the base station. For example, the RAN node may be a central unit (central unit, CU), a distributed unit (distributed unit, DU), or a radio unit (radio unit, RU). The CU herein implements functions of a radio resource control protocol and a packet data convergence protocol (packet data convergence protocol, PDCP) of the base station, and may further implement functions of a service data adaptation protocol (service data adaptation protocol, SDAP). The DU implements functions of a radio link control layer and a medium access control (medium access control, MAC) layer of the base station, and may further implement a part or all of functions of a physical layer. For specific descriptions of the foregoing protocol layers, refer to technical specifications related to the 3GPP generation partnership project. The RU may be configured to implement a function of receiving and sending a radio frequency signal. The CU and the DU may be two independent RAN nodes, or may be integrated into a same RAN node, for example, integrated into a baseband unit (baseband unit, BBU). The RU may be included in a radio frequency device, for example, included in a remote radio unit (remote radio unit, RRU) or an active antenna unit (active antenna unit, AAU). The CU may be further divided into two types of RAN nodes: a CU-control plane and a CU-user plane.

In different systems, the RAN node may have different names, for example, in an O-RAN system, the CU may be referred to as an open CU (open CU, O-CU), the DU may be referred to as an open DU (open DU, O-DU), and the RU may be referred to as an open RU (open RU, O-RU). The RAN node in embodiments of this application may be implemented through a software module, a hardware module, or a combination of a software module and a hardware module. For example, the RAN node may be a server loaded with a corresponding software module. A specific technology and a specific device form used by the RAN node are not limited in embodiments of this application.

In addition, the RAN node may also be referred to as a network device, and the network device is an apparatus that is deployed in a radio access network and that provides a wireless communication function for a terminal device. The network device may include various forms of macro base stations, micro base stations (also referred to as small stations), relay stations, access points, and the like. In a system using different radio access technologies, names of network devices may be different, for example, an eNB or an evolutional nodeB (eNodeB) in long term evolution (Long Term Evolution, LTE). The network device may alternatively be a wireless controller in a cloud radio access network (Cloud Radio Access Network, CRAN) scenario. The network device may alternatively be a base station device in a future 5G network or a network device in a future evolved PLMN network. The network device may further be a wearable device or an in-vehicle device. The network device may further include a transmission and reception point (Transmission and Reception Point, TRP). In addition, in a network structure, the network device may include a centralized unit (centralized unit, CU) node or a distributed unit (distributed unit, DU) node, or a RAN device including a CU node and a DU node. For ease of description, the base station is used as an example of the RAN node below for description.

The terminal is a device having a radio transceiver function, and may send a signal to the base station or receive a signal from the base station. The terminal may also be referred to as a terminal device, a user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), an internet of things (internet of things, IOT), virtual reality, augmented reality, industrial control, autonomous driving, telemedicine, a smart grid, smart furniture, a smart office, a smart wearable, smart transportation, and a smart city. The terminal may be a mobile phone, a tablet computer, a computer with a wireless transceiver function, a wearable device, a vehicle, a plane, a ship, a robot, a robot arm, a smart home device, or the like. A specific technology and a specific device form used by the terminal are not limited in embodiments of this application.

The base station and the terminal may be fixed or movable. The base station and the terminal may be deployed on land, including an indoor or outdoor device, a handheld device, or an in-vehicle device, or may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1A may be configured as a mobile base station, and for a terminal 120j accessing a radio access network 100 through 120i, the terminal 120i is the base station. However, for a base station 110a, 120i is a terminal. In other words, communication between 110a and 120i is performed according to a radio air interface protocol. Certainly, the communication between 110a and 120i may alternatively be performed according to on an interface protocol between base stations. In this case, for 110a, 120i is also a base station. Therefore, both the base station and the terminal may be collectively referred to as communication apparatuses, 110a and 110b in FIG. 1A may be referred to as communication apparatuses having a function of the base station, and 120a to 120j in FIG. 1A may be referred to as communication apparatuses having a function of the terminal.

Communication between the base station and the terminal, between base stations, or between terminals may be performed by using a licensed spectrum, or may be performed by using an unlicensed spectrum, or may be performed by using both the licensed spectrum and the unlicensed spectrum. Communication may be performed by using a spectrum below 6 gigahertz (gigahertz, GHz), or may be performed by using a spectrum above 6 GHz, or may be performed by using both the spectrum below 6 GHz and the spectrum above 6 GHz. A spectrum resource for wireless communication is not limited in embodiments of this application.

In embodiments of this application, the function of the base station may be performed by a module (for example, a chip) in the base station, or may be performed by a control subsystem including the function of the base station. The control subsystem including the function of the base station herein may be a control center in the foregoing application scenarios such as a smart grid, industrial control, smart transportation, and a smart city. The function of the terminal may also be performed by a module (for example, a chip or a modem) in the terminal, or may be performed by an apparatus including the function of the terminal.

It may be understood that, the foregoing described RAN 100 includes at least one RAN node (110a and 110b shown in FIG. 1A, which are collectively referred to as 110), and may further include at least one terminal (120a to 120j shown in FIG. 1A, which are collectively referred to as 120).

In a possible implementation, the communication system shown in FIG. 1A may alternatively be shown in FIG. 1B, that is, includes a RAN node 110 and a plurality of terminals (120A and 120B shown in FIG. 1B). In this case, a single RAN node may transmit data or control signaling to a single or a plurality of terminals.

In another possible implementation, the communication system shown in FIG. 1A may alternatively be shown in FIG. 1C, that is, includes a plurality of RAN nodes (110A, 110B, and 110C shown in FIG. 1C) 110 and one terminal 120. In this case, the plurality of RAN nodes may simultaneously transmit data or control signaling to a single terminal.

In the communication system, after receiving an uplink grant (UL grant) resource sent by the base station, a MAC entity on a terminal side triggers an LCP. The MAC entity on the terminal side allocates a resource to each LCH based on a priority determined by the LCP. Specifically, a resource allocation operation includes two rounds: in a first round, radio resources are sequentially allocated, based on a descending order of an LCH priority, to logical channels that have data to be transmitted and average data traffic does not satisfy a PBR requirement of the LCH; and in a second round, if there are remaining resources, resource allocation is still performed based on the LCH priority, until data transmission of the LCH is completed or all uplink grant resources are allocated. However, on the foregoing terminal side, a resource allocation manner for the LCH is monotonous, and cannot adapt to an emergency service scenario.

To resolve the foregoing technical problem, an embodiment of this application provides a communication method and a related device, and whether to map a first object to a first resource is determined based on delay information of the first object, so that resource allocation performed on emergency service data having a high delay requirement corresponding to the first object may be implemented.

The following describes the communication method provided in this embodiment of this application.

FIG. 2 is a schematic flowchart of a communication method according to an embodiment of this application. The method may include step 201 and step 202. The method may be performed by a communication apparatus. If not specifically described, the "communication apparatus" in this application may refer to the communication apparatus itself (for example, a network device or a terminal device), or may be a component (for example, a processor, a chip, or a chip system) in the communication apparatus, or may be a logical module or software that can implement all or some functions of the communication apparatus. Processing performed by a single execution body in step 201 and step 202 may also be divided into processing performed by a plurality of execution bodies, and these execution bodies may be logically and/or physically separated. For example, when the communication apparatus is the network device, processing performed by the network device may be divided into processing performed by at least one of a CU, a DU, and an RU. Step 201 and step 202 are described in detail below.

Step 201: Obtain configuration information.

In embodiments of this application, there are a plurality of manners in which the communication apparatus obtains the configuration information, which may be a manner in which the network device or a server performs pre-configuration, a manner in which the network device or the server sends the configuration information, a manner in which the network device or the server selects the configuration information from a database or a storage system, or the like. This is not specifically limited herein.

The configuration information indicates a first resource. The configuration information may also be understood as resource configuration information. The first resource may specifically include a time-domain resource and/or a frequency-domain resource, and may be an uplink pre-configured resource or a downlink pre-configured resource, the pre-configured resource includes a resource provided by RRC, or a resource provided by a physical downlink control channel (Physical Downlink Control Channel, PDCCH), and resource activation or deactivation is performed through signaling of layer 1.

In a possible implementation, the communication apparatus is a terminal device, and the network device sends the configuration information to the terminal device. Correspondingly, the terminal device receives the configuration information sent by the network device. A process in which the network device sends the configuration information to the terminal device may also be understood as a process of configuring the resource for the terminal device.

Optionally, a manner in which the network device sends the configuration information may be a manner of sending the configuration information to a specified terminal device, may be a manner of broadcasting the configuration information, or the like. This is not specifically limited herein.

Optionally, the configuration information may be carried in the RRC, MAC CE, DCI, or another message/signaling. This is not specifically limited herein.

In addition, a manner of triggering the network device to send the configuration information to the terminal device may be actively triggered, or may be passively triggered. This is not specifically limited herein. For example, a process in which the network device sends the configuration information to the terminal device may be triggered based on a request of the terminal device. For another example, the network device actively sends the configuration information to the terminal device.

In another possible implementation, the communication apparatus is the network device, and a process in which the network device obtains the configuration information may also be understood as a process in which the network device configures the resource for the terminal device.

Optionally, in addition to indicating the first resource, the configuration information may further indicate or associate one or more of the following: first indication information, second indication information, a preset threshold, an object identifier, delay-sensitive data, or the like.

When the foregoing configuration information indicates the first resource, the configuration information may also indicate the foregoing information, which refers to that the foregoing information is applied to the first resource, or the first resource is associated with the foregoing information.

The first indication information indicates that a first object is capable of using the preset threshold or a first mapping rule, the preset threshold is related to delay information, and the first mapping rule is a rule for mapping the first object to the first resource based on the delay information. The first indication information may also be understood as indication information of an object level, and is mainly used for determining which objects are capable of using the preset threshold or the first mapping rule. Alternatively, it is understood that a plurality of objects may include an object that is capable of using the preset threshold or the first mapping rule, or may include an object that is not capable of using the preset threshold or the first mapping rule.

The first indication information indicates that the first object is capable of using the preset threshold or the first mapping rule, and may be used for direct indication. In another case, the first indication information is used for indirect indication. The first indication information indicates that a second object is capable of using the preset threshold or the first mapping rule, where the second object includes the first object. In this case, the first indication information may indirectly indicate that the first object is capable of using the preset threshold or the first mapping rule. For example, the first object is a logical channel and the second object is a logical channel group, where the network device configures the first indication information to indicate that an LCG1 is capable of using the preset threshold or the first mapping rule, and the LCG1 includes an LCH1-3. In this case, the LCH1-3 is capable of using the preset threshold or the first mapping rule. In another case, the network device configures the first indication information to indicate that the LCH1 is capable of using the preset threshold or the first mapping rule, where the LCH1 includes a data packet. In this case, the data packet in the LCH1 is capable of using the preset threshold or the first mapping rule.

The second indication information indicates that a preset threshold or a second mapping rule is capable of being used, the preset threshold is related to the delay information, the second mapping rule is a rule for mapping the second object to the first resource based on the delay information, and the second object includes the first object. The second indication information may also be understood as indication information of a communication apparatus level, and is, for example, mainly used for determining which terminal devices are capable of using the preset threshold or the first mapping rule. Alternatively, it is understood that when the network device configures the second indication information for a plurality of terminal devices, a plurality of terminal devices may include a terminal device that is capable of using the preset threshold or the first mapping rule, or may include a terminal device that is not capable of using the preset threshold or the first mapping rule.

In an implementation, the second object includes the first object. The second object may be the first object, or the second object includes the first object and another object.

The first mapping rule or the second mapping rule is a rule for mapping the first object to the first resource based on the delay information, and may also be understood that the first mapping rule or the second mapping rule is a rule for selecting the first object for the first resource based on the delay information, or data for transmitting the first object on the first resource based on the delay information. The preset threshold associated with the first resource is related to the delay information of the object associated with the first resource, and the object associated with the first resource includes the first object. Alternatively, it is understood that whether the object is mapped to the first resource is determined by configuring the preset threshold associated with the first resource and the delay information of the object associated with the first resource.

The object identifier is used for distinguishing different objects, or it is understood that different objects have different object identifiers. The configuration information or the first resource may be associated with an identifier of the first object.

The delay-sensitive data may be data of a delay-sensitive service, and the delay-sensitive service is a service sensitive to a delay, for example, an XR service such as an augmented reality (augmented reality, AR) service or a virtual reality (virtual reality, VR) service. For another example, the service is a service having a high delay requirement (such as a live service or a simultaneous transmission service). Whether the service is the delay-sensitive service may be set based on an actual requirement. This is not specifically limited herein. In an implementation, the delay-sensitive data refers to that a remaining duration of the data is less than a threshold. In an implementation, the delay-sensitive data associated with the first resource is configured through third indication information, the third indication information indicates the delay-sensitive data associated with the first resource, and the configuration information further indicates the third indication information.

It may be understood that, the threshold involved in embodiments of this application may be independently set, or may be a threshold reusing the existing standard, or the like. This is not specifically limited herein.

The object in embodiments of this application includes one or more of the following types: a PDU, a PDU set, an SDU, a MAC entity, a PDCP entity, an RLC entity, an LCH, an LCG, a DRB, a QoS flow, or the like.

Step 202: Map the first object to the first resource based on the delay information of the first object.

The communication apparatus maps the first object to the first resource based on the delay information of the first object. The delay information of the first object includes a remaining duration and/or a buffering duration.

This step may be specifically mapping the first object to the first resource based on the delay information of the first object, or may be mapping the first object to the first resource based on delay information of the first object and another object (which may also be understood as mapping a specific object to the first resource based on the delay information of the object), or may be mapping the first object to the first resource based on the delay information of the first object and the preset threshold, or may be mapping the first object to the first resource based on the delay information of the first object, the delay information of another object, and the preset threshold. This is not specifically limited herein.

It should be noted that, the delay information may have different explanations based on different types of the object.

Example 1: When a type of the object includes the LCH, the LCH may have a plurality of data packets, and each data packet has one piece of delay information. In this case, the smallest or the largest delay information (for example, the smallest delay information corresponds to the remaining duration, and the largest delay information corresponds to the buffering duration) in the plurality of data packets may be used as delay information of the LCH. For example, the LCH has two data packets, a remaining duration of one data packet is 5 milliseconds, and a remaining duration of the other data packet is 10 milliseconds. Therefore, 5 milliseconds may be used as a remaining duration of the LCH. For another example, the LCH has two data packets, a buffering duration of one data packet is 5 milliseconds, and a buffering duration of the other data packet is 10 milliseconds. Therefore, 10 milliseconds may be used as a buffering duration of the LCH. The remaining duration of the LCH may be a remaining duration of a first arrived data packet in data packets currently buffered in the LCH.

Example 2: When the type of the object includes the PDCP/MAC/RLC entity, delay information of the PDCP/RLC entity includes a remaining duration of data on a PDCP layer and/or a buffering duration of data on the PDCP layer. Delay information of the MAC layer entity includes the smallest or the largest delay information in all LCH or LCG delay information.

Example 3: When the type of the object includes the PDU, delay information of the PDU includes a remaining duration of the PDU and/or a buffering duration of the PDU.

Example 4: When the type of the object includes the DRB, delay information of the DRB may include the smallest or the largest delay information in delay information of the PDU entity/delay information of the MAC/the smallest or the largest delay information in delay information of the RLC entity/the smallest or the largest delay information in delay information of the QoS flow.

Example 5: When the type of the object includes the QoS flow, delay information of the QoS flow includes the smallest or the largest delay information of data transmitted in the QoS flow.

Example 6: When the type of the object includes the PDU set, delay information of the PDU set includes delay information of a first data packet or delay information of a starting data packet in the PDU set, or the smallest or the largest delay information in a data packet included in the PDU set.

In embodiments of this application, there are a plurality of cases in which the first object is mapped to the first resource based on the delay information of the first object, and the plurality of cases are respectively described below.

In a first case, the first object is mapped to the first resource based on the delay information.

In an implementation, the first object is mapped to the first resource when the delay information of the first object satisfies a first condition. Alternatively, it is understood that a premise of mapping the first object to the first resource needs to satisfy the first condition. Alternatively, it is understood that the first object is mapped to the first resource when the delay information of the first object satisfies the first condition. For example, the first condition may be specifically one or more of the following: the remaining duration of the first object being less than or equal to a first threshold; the remaining duration of the first object being less than or equal to the first threshold and being greater than or equal to a third threshold; the buffering duration of the first object being greater than or equal to a second threshold; or the buffering duration of the first object being greater than or equal to the second threshold and being less than or equal to a fourth threshold.

Optionally, the first object is not capable of being mapped to the first resource when the delay information of the first object does not satisfy the preset threshold.

In embodiments of this application, the mapping the first object to the first resource based on the delay information of the first object includes one or more of the following:
mapping the first object to the first resource when the remaining duration of the first object is less than or equal to the first threshold;
mapping the first object to the first resource when the buffering duration of the first object is greater than or equal to the second threshold;
mapping the first object to the first resource when the remaining duration of the first object is less than or equal to the first threshold and is greater than or equal to the third threshold; or
mapping the first object to the first resource when the buffering duration of the first object is greater than or equal to the second threshold and is less than or equal to the fourth threshold.

Optionally, the first object includes a plurality of sub-objects. In an implementation, the first object needs to satisfy the first condition, that is, delay information of each sub-object of the plurality of sub-objects satisfies the first condition. In an implementation, the first object does not satisfy the first condition.

Optionally, the mapping the first object to the first resource based on the delay information of the first object includes one or more of the following:
mapping a sub-object satisfying a preset condition to the first resource; and
the preset condition includes one or more of the following:
a preset quantity, where the preset quantity is a preset value or is related to sorting of delay information corresponding to the plurality of sub-objects;
the remaining duration being the smallest;
the buffering duration being the largest, or the like.

Optionally, the first object may be a general concept, and the sub-object is a feature concept. For example, the first object is the LCH, and sub-objects of the first object are specifically an LCH1, an LCH2, and the like. The second object may be understood as a previous-level object to which the first object belongs. For example, the second object is the LCG, and the first object is specifically the LCH1 and the LCH2 in the LCG. For another example, the second object is the LCH, and the first object is a data packet 1, a data packet 2, and the like in the LCH.

In an implementation, sorting of delay information corresponding to the plurality of sub-objects may also be understood as: sorting the plurality of sub-objects in ascending order based on the remaining duration, and then selecting a preset quantity of sub-objects to is capable of being mapped to the first resource (that is, selecting K sub-objects with a short remaining duration in a manner of selecting TOP-K, for example, the first object includes N sub-objects, where K is less than or equal to N). Alternatively, it is understood that the plurality of sub-objects are sorted in descending order based on the buffering duration, and then a preset quantity of sub-objects are selected to is capable of being mapped to the first resource (that is, K sub-objects with a long buffering duration are selected in a manner of selecting TOP-K). An understanding is that a remaining delay of the plurality of sub-objects satisfies the first condition. An understanding is that the plurality of sub-objects are not constrained by the first condition, and are only sorted based on the remaining delay. Further, the plurality of sub-objects may correspond to a same preset threshold or different preset thresholds. In other words, when a network side configures the preset threshold, the preset threshold is configured based on granularity of the first object, and one threshold corresponds to one object. For example, an example in which a type of the first object is the LCH is used. Assuming that the plurality of sub-objects include the LCH1 and the LCH2, the LCH1 may correspond to one preset threshold, and the LCH2 may correspond to one preset threshold, where values of the preset thresholds corresponding to the LCH1 and the LCH2 may be the same or different. The preset threshold used for determining whether the LCH1 is mapped to the first resource is different from the preset threshold used for determining whether the LCH2 is mapped to the first resource.

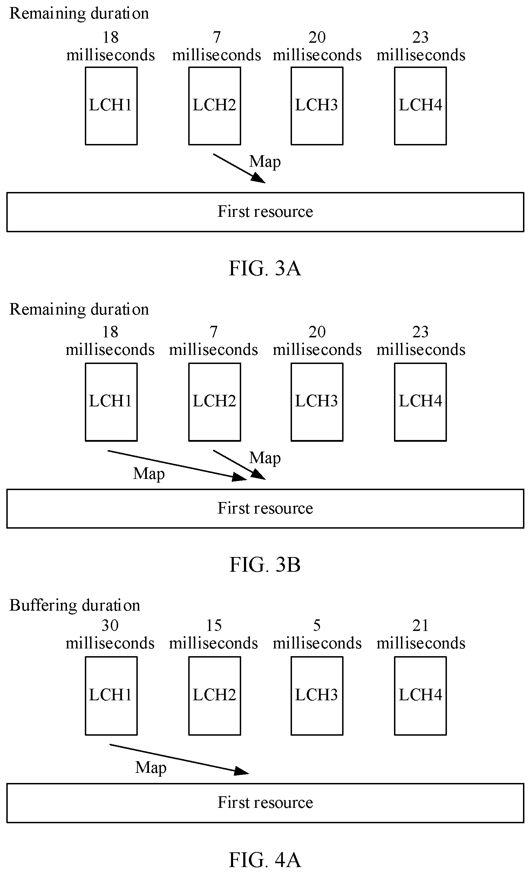

For example, as shown in FIG. 3A, an example in which the delay information of the first object is the remaining duration of the LCH is used. It is assumed that the first object has a plurality of LCHs, which are respectively an LCH1, an LCH2, an LCH3, and an LCH4. A remaining duration of the LCH1 is 18 milliseconds, a remaining duration of the LCH2 is 7 milliseconds, a remaining duration of the LCH3 is 20 milliseconds, and a remaining duration of the LCH4 is 23 milliseconds. It can be seen that, the remaining duration of the LCH2 is the smallest, so that the LCH2 is mapped to the first resources. Certainly, if the TOP-K manner is used, as shown in FIG. 3B, it is assumed that K is 2, and the LCH2, the LCH1, the LCH3, and the LCH4 are sorted based on the remaining durations in ascending order. Because K=2, and N is 4, the LCH2 and the LCH1 are mapped to the first resource. In an implementation, the preset threshold is 20 milliseconds, and LCHs satisfying that the remaining duration of the LCH is less than or equal to 20 milliseconds are the LCH1, the LCH2, and the LCH3. Assuming that the preset quantity K is 2, and N is 3, in this case, the LCH1 and the LCH2 are mapped to the first resource.

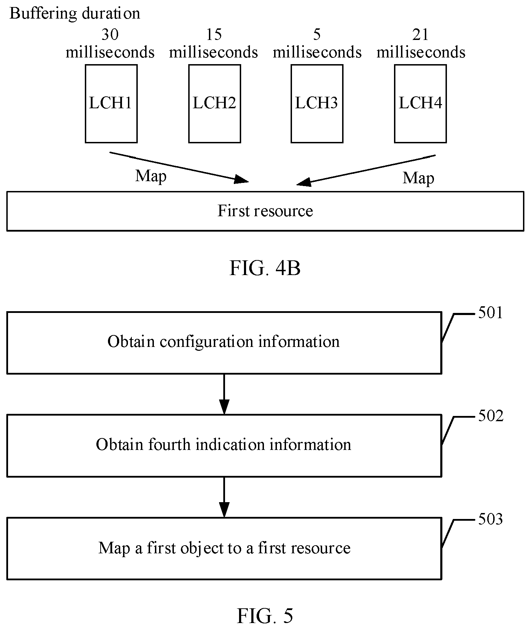

For example, as shown in FIG. 4A, an example in which the delay information of the first object is the buffering duration of the LCH is used. It is assumed that the first object has a plurality of LCHs, which are respectively the LCH1, the LCH2, the LCH3, and the LCH4. A buffering duration of the LCH1 is 30 milliseconds, a buffering duration of the LCH2 is 15 milliseconds, a buffering duration of the LCH3 is 5 milliseconds, and a buffering duration of the LCH4 is 21 milliseconds. It can be seen that, the buffering duration of the LCH1 is the largest. Therefore, the LCH1 is mapped to the first resource. Certainly, if the TOP-K manner is used, as shown in FIG. 4B, it is assumed that K is 2, and the LCH1, the LCH4, the LCH2, and the LCH3 are sorted based on the buffering durations in descending order. Because K=2, the LCH4 and the LCH1 are mapped to the first resource. In an implementation, the preset threshold is 20 milliseconds, and LCHs satisfying that the buffering duration of the LCH is greater than or equal to 15 milliseconds are the LCH1, the LCH2, and the LCH4. Assuming that the preset quantity K is 2, and N is 3, in this case, the LCH1 and the LCH4 are mapped to the first resource.

In a second case, the first object is mapped to the first resource based on the delay information and the indication information.

In this case, a manner in which the communication apparatus obtains the indication information may be a manner in which the communication apparatus receives the indication information sent by another device (for example, the network device), or may be a manner in which the communication apparatus obtains the indication information from the configuration information of the resource. This is not specifically limited herein. Alternatively, it is understood that the indication information may be carried in the configuration information, or may be transferred through independent information.

The indication information includes the first indication information and/or the second indication information. For descriptions of the first indication information and the second indication information, refer to descriptions in the foregoing step 201. Details are not described herein again.

In a possible implementation, when the first indication information received by the communication apparatus indicates that the first object is capable of using the preset threshold or the first mapping rule, and the delay information of the first object satisfies the first condition, the first object is mapped to the first resource. Alternatively, it is understood that a premise of mapping the first object to the first resource needs to satisfy two conditions, where one condition is that the first indication information indicates that the first object is capable of using the preset threshold or the first mapping rule, and the other condition is that the delay information of the first object satisfies the first condition.

For example, the first object is not capable of being mapped to the first resource when the first indication information received by the communication apparatus indicates that the first object is capable of using the preset threshold or the first mapping rule, but the delay information of the first object does not satisfy the preset threshold. For another example, the first object is not capable of being mapped to the first resource either when the first indication information received by the communication apparatus indicates that the first object is not capable of using the preset threshold or the first mapping rule, but the delay information of the first object satisfies the first condition.

In a possible description, if the delay information of the first object indicated by the first indication information satisfies the first condition, the first object is selected for the first resource. Alternatively, if the first object is the first object indicated by the first indication information, and the delay information of the first object satisfies the first condition, the first object is selected for the first resource.

In another possible implementation, the first object is mapped to the first resource when the communication apparatus receives the second indication information, and the delay information of the first object satisfies the first condition. Alternatively, it is understood that a premise of mapping the first object to the first resource needs to satisfy two conditions, where one condition is that the second indication information indicates that the preset threshold or the second mapping rule is capable of being used, and the other condition is that the delay information of the first object satisfies the first condition.

In a possible description, if the second indication information is configured, the first object is selected for the first resource. Alternatively, if the second indication information is configured, and the delay information of the first object satisfies the first condition, the first object is selected for the first resource.

For example, the first object is not capable of being mapped to the first resource when the second indication information received by the communication apparatus indicates that the communication apparatus is capable of using the preset threshold or the second mapping rule, but the delay information of the first object does not satisfy the preset threshold. For another example, the communication apparatus may not map the first object to the first resource either when the received second indication information indicates that the communication apparatus is not capable of using the preset threshold or the second mapping rule, but the delay information of the first object satisfies the first condition.

It may be understood that, the foregoing second indication information may also be understood as enabling information. If the communication apparatus does not obtain the second indication information, or the second indication information is released, the preset threshold or the second mapping rule is not capable of being used.

There are a plurality of cases of the first indication information:
1. The first indication information indicates that the first object is capable of using the preset threshold or the first mapping rule.

Specifically, the first indication information includes a bit corresponding to the first object, a value of the bit is a first value or a second value, the first value corresponds to that the first object is capable of mapping the first object to the first resource based on the delay information, and the second value corresponds to that the first object is not capable of mapping the first object to the first resource based on the delay information. Alternatively, the first indication information includes an information bit corresponding to the first object. When the information bit is true (true) or enabled (enable), the first object is capable of mapping the first object to the first resource based on the delay information. When the information bit is false (false) or disabled (disable), the first object is not capable of mapping the first object to the first resource based on the delay information.

This case may also be understood that the first object is mapped to the first resource when the communication apparatus receives the first indication information, the value of the bit corresponding to the first indication information is the first value, and the delay information of the first object satisfies the first condition.

Optionally, when the communication apparatus receives the first indication information, and the value of the bit corresponding to the first indication information is the second value, the first object is not capable of being mapped to the first resource even if the delay information of the first object satisfies the first condition.

For example, an example in which the type of the object is the LCH is used, the first indication information includes four bits, which respectively correspond to the LCH1, the LCH2, the LCH3, and the LCH4, and it is assumed that the first indication information is specifically 0011. In other words, a bit corresponding to the LCH1 is 0, a bit corresponding to the LCH2 is 0, a bit corresponding to the LCH3 is 1, and a bit corresponding to the LCH4 is 1. It is assumed that 0 indicates that the first object is not capable of being mapped to the first resource based on the delay information. It is assumed that 1 indicates that the first object is capable of being mapped to the first resource based on the delay information. In this case, the LCH1 and the LCH2 may not map the first object to the first resource based on the delay information. The LCH3 and the LCH4 may map the first object to the first resource based on the delay information.

For example, using an example in which the type of the object is the LCH, the information bit is true or false, and the first indication information is configured when the LCH1 is configured. When the first indication information is true, the LCH1 may map the first object to the first resource based on the delay information. When the first indication information is false, the LCH1 may not map the first object to the first resource based on the delay information.

It may be understood that, in the foregoing example, alternatively, 1 indicates that the first object is not capable of being mapped to the first resource based on the delay information, and 0 indicates that the first object is capable of being mapped to the first resource based on the delay information. Similarly, a false indication is that the first object is mapped to the first resource based on the delay information, and a true indication is that the first object is not capable of being mapped to the first resource based on the delay information.

2. The first indication information indicates the identifier of the first object.

This case may also be understood that the first object is mapped to the first resource when the communication apparatus receives the first indication information, and uses an object corresponding to an identifier in the first indication information as the first object, and the delay information of the first object satisfies the first condition.

For example, an example in which the type of the object is the LCH is used, where an identifier corresponding to the LCH1 is 1, an identifier corresponding to the LCH2 is 2, an identifier corresponding to the LCH3 is 3, and an identifier corresponding to the LCH4 is 4. If the first indication information indicates 2 (which corresponds to the LCH2) and 3 (which corresponds to the LCH3), and delay information of the LCH2 and delay information of the LCH3 both satisfy the first condition, the LCH2 and the LCH3 are mapped to the first resource. Certainly, if the first indication information indicates 2 and 3, and the delay information of the LCH2 does not satisfy the first condition, the LCH3 is mapped to the first resource.

In a third case, the first object is mapped to the first resource based on the delay information and/or the indication information, and information about the delay-sensitive data associated with the first resource.

In this case, whether the first resource is associated with the delay-sensitive data needs to be determined. When the first resource is associated with the delay-sensitive data, the first object is capable of being mapped to the first resource based on the delay information and/or the indication information.

In an implementation, if the delay information of the first object satisfies the first condition, and the first resource is associated with the delay-sensitive data/the third indication information, the first object is selected for the first resource.

In another implementation, if the delay information of the first object indicated by the first indication information satisfies the first condition, and the first resource is associated with the delay-sensitive data/the third indication information, the first object is selected for the first resource.

In another implementation, if the delay information of the first object indicated by the first indication information satisfies the first condition, the first indication information indicates that the first object is capable of using the preset threshold or the first mapping rule, and the first resource is associated with the delay-sensitive data/the third indication information, the first object is selected for the first resource.

In another implementation, if the first object is the first object indicated by the first indication information, the delay information of the first object satisfies the first condition, and the first resource is associated with the delay-sensitive data/the third indication information, the first object is selected for the first resource.

In another implementation, if the first object is the first object indicated by the first indication information, the first indication information indicates that the first object is capable of using the preset threshold or the first mapping rule, the delay information of the first object satisfies the first condition, and the first resource is associated with the delay-sensitive data/the third indication information, the first object is selected for the first resource.

In another implementation, if the second indication information is configured, the delay information of the first object satisfies the first condition, and the first resource is associated with the delay-sensitive data/the third indication information, the first object is selected for the first resource.

In another implementation, if the second indication information is configured, the second indication information indicates that the preset threshold or the second mapping rule may be used, the second object in the second mapping rule includes the first object, the delay information of the first object satisfies the first condition, and the first resource is associated with the delay-sensitive data/the third indication information, the first object is selected for the first resource.

It may be understood that, the foregoing several cases are merely examples. In an actual application, there may be other cases. This is not specifically limited herein.

In addition, the first object in embodiments of this application may be associated with the first resource, or may be associated with a plurality of candidate resources.

The first object being associated with the resource may be understood that the first object may satisfy a condition of mapping the first object to the resource based on the delay information.

The plurality of candidate resources include the first resource and a second resource, a preset threshold associated with the first resource and a preset threshold associated with the second resource satisfy the preset condition, and the preset threshold associated with the first resource is related to the delay information of the object associated with the first resource. The preset threshold associated with the second resource is related to delay information of an object associated with the second resource, and the preset threshold includes a threshold (for example, the first threshold and/or the third threshold) corresponding to a case in which the delay information is the remaining duration and/or a threshold (for example, the second threshold and/or the fourth threshold) corresponding to a case in which the delay information is the buffering duration.

The preset threshold associated with the first resource is related to the delay information of the object associated with the first resource, which may be understood that the preset threshold is applied to determining of the delay information of the object.

The preset threshold associated with the first resource and the preset threshold associated with the second resource satisfying the preset condition includes:
a first threshold associated with the first resource being less than a first threshold associated with the second resource; or
a second threshold associated with the first resource being greater than a second threshold associated with the second resource.

When the first object may be associated with a plurality of resources, a resource to which the first object is mapped is determined based on an association threshold of the resource. In a case, a resource having a smallest association threshold is selected for the first object. In a case, a resource having a largest association threshold is selected for the first object. For example, the first resource is associated with the first threshold, the second resource is associated with the second threshold, and the first object may be associated with the first resource and the second resource based on the first condition, that is, the first object satisfies the first condition and may be associated with the first resource and the second resource. When the first threshold is less than the second threshold, the first object is mapped to the first resource.

In embodiments of this application, whether to map the first object to the first resource may be determined through the delay information of the first object, thereby implementing resource allocation performed on emergency service data having a high delay requirement corresponding to the first object. In addition, whether to map the first object to the first resource may also be determined through the delay information of the first object and other information (such as indication information and uplink grant). This not only may improve flexibility of the solution, but also may adapt to an existing uplink grant process.

FIG. 5 is a schematic flowchart of a communication method according to an embodiment of this application. The method may include step 501 to step 503. The method may be performed by a communication apparatus. If not specifically described, the "communication apparatus" in this application may refer to the communication apparatus itself (for example, a network device or a terminal device), or may be a component (for example, a processor, a chip, or a chip system) in the communication apparatus, or may be a logical module or software that can implement all or some functions of the communication apparatus. Processing performed by a single execution body in step 501 to step 503 may also be divided into processing performed by a plurality of execution bodies, and these execution bodies may be logically and/or physically separated. For example, when the communication apparatus is the network device, processing performed by the network device may be divided into processing performed by at least one of a CU, a DU, and an RU. Step 501 to step 503 are described in detail below.

Step 501: Obtain configuration information.

The configuration information indicates a first resource. For descriptions of the configuration information, refer to the descriptions of step 201 in the embodiment shown in FIG. 2. Details are not described herein again.

The configuration information in this embodiment may include or be associated with third indication information, and the third indication information indicates an identifier of a first object.

Step 502: Obtain fourth indication information.

A manner in which the communication apparatus obtains the indication information may be a manner in which the communication apparatus receives the fourth indication information sent by another device, or may be a manner in which the communication apparatus obtains the fourth indication information from the configuration information of the resource. This is not specifically limited herein. Alternatively, it is understood that the fourth indication information may be carried in the configuration information, or may be transferred through independent information.

The fourth indication information indicates the identifier of the first object, or the fourth indication information indicates that the first object is capable of using, being associated with, or mapping the first resource, or is not capable of using, being associated with, or mapping the first resource.

Specifically, the fourth indication information includes a bit corresponding to the first object, a value of the bit is a first value or a second value, the first value correspondingly indicates that the first object is capable of using, being associated with, or mapping the first resource, and the second value correspondingly indicates that the first object is not capable of using, being associated with, or mapping the first resource. Alternatively, the fourth indication information includes an information bit corresponding to the first object, and when the information bit is true (true) or enabled (enable), the first object is capable of using, being associated with, or mapping the first resource, and when the information bit is false (false) or disabled (disable), the first object is not capable of using, being associated with, or mapping the first resource. In an implementation, when the first object is an LCG, the first object indicated by the fourth indication information or the first object that is capable of using the first resource belongs to a same DRB or is a PDCP entity. In an implementation, when the first object is an LCH, the first object indicated by the fourth indication information or the first object that is capable of using the first resource belongs to a same LCG, a same DRB, or is a PDCP entity. The first object indicated by the fourth indication information or the first object that is capable of using the first resource belongs to a same multi-modal service.

Step 503: Map the first object to the first resource.

When the communication apparatus obtains the configuration information and the fourth indication information of the first resource, and the fourth indication information indicates the identifier of the first object, the first object is mapped to the first resource. Alternatively, it is understood that the communication apparatus maps the object indicated by the fourth indication information to the first resource.

In embodiments of this application, the fourth indication information may be used to determine which objects are mapped to the first resource, thereby improving accuracy of resource allocation.

A terminal device may report, to a network side, a capability of mapping the first object to the first resource based on delay information. After obtaining the capability, a network device may configure information based on the capability.

The communication method provided in embodiments of this application is described above from a perspective of the network device or the terminal device. The following describes the communication method provided in embodiments of this application from a perspective of interaction between the network device and the terminal device.

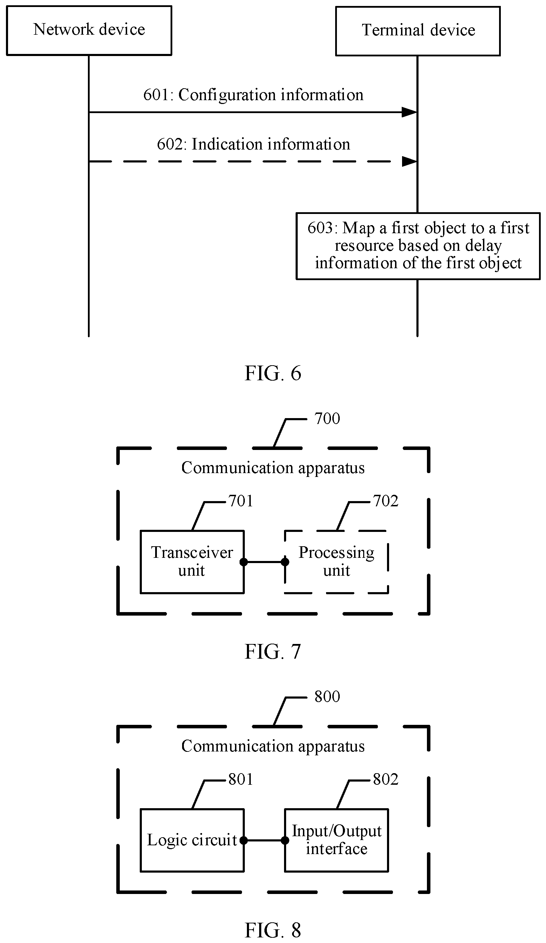

FIG. 6 is a schematic flowchart of a communication method according to an embodiment of this application. The method may include step 601 to step 603. The method may be performed by a terminal device and a network device, or may be performed by a component (such as a processor, a chip, or a chip system) of a terminal device and a component (such as a processor, a chip, or a chip system) of a network device. Step 601 to step 603 are described in detail below.

Step 601: The network device sends configuration information to the terminal device.

The network device sends the configuration information to the terminal device. Correspondingly, the terminal device receives the configuration information sent by the network device.

For descriptions of the configuration information, refer to the descriptions in the embodiment shown in FIG. 2. Details are not described herein again.

Step 602: The network device sends indication information to the terminal device. This step is optional.

Optionally, the network device sends the indication information to the terminal device. Correspondingly, the terminal device receives the indication information sent by the network device.

The indication information indicates to map a first object to a first resource based on delay information of the first object. It may be understood that, the indication information may be specifically at least one of the first indication information, the second indication information, or the third indication information in the embodiment shown in FIG. 2.

For descriptions of the first indication information and the second indication information, refer to the descriptions in the embodiment shown in FIG. 2. Details are not described herein again.

Step 603: The terminal device maps the first object to the first resource based on the delay information of the first object.

After obtaining the configuration information, the terminal device maps the first object to the first resource based on the delay information of the first object. The network device may receive data of the terminal device on the first resource, where the data may be data of the first object, and delay information of the data satisfies a first condition.

For descriptions of this step, refer to the descriptions in the embodiment shown in FIG. 2. Details are not described herein again.

In a possible implementation, the communication method provided in this embodiment includes step 601 and step 603. In another possible implementation, the communication method provided in this embodiment includes step 601 and step 603.

In embodiments of this application, whether to map the first object to the first resource may be determined through the delay information of the first object, thereby implementing resource allocation performed on emergency service data having a high delay requirement corresponding to the first object. In addition, whether to map the first object to the first resource may also be determined through the delay information of the first object and other information (such as indication information and uplink grant). This not only may improve flexibility of the solution, but also may adapt to an existing uplink grant process.

In addition, it should be noted that, the method provided in embodiments of this application may be combined with an existing mapping rule. For the existing mapping rule, refer to descriptions in the foregoing explanations of nouns. Details are not described herein again.

Optionally, when the existing mapping rule is satisfied, and the method provided in embodiments of this application is satisfied, the first object is mapped to the first resource based on the delay information of the first object.

For example, specifically with reference to an example, when allowed SCS-List is configured, and the delay information of the first object satisfies the first condition, in this case, the first resource is associated with an SCS in allowed SCS-List and associated with the indication information, and the first object is mapped to the first resource. For another example, when allowed SCS-List is not configured on the first resource (which may also be understood as uplink grant), but the first indication information is configured on the first resource, the first object is not capable of being mapped to the first resource based on the delay information of the first object.

Certainly, possibly with changes of the standard, or when an existing mapping rule is not satisfied, but the method provided in embodiments of this application is satisfied, the first object is mapped to the first resource based on the delay information of the first object.

For example, specifically with reference to an example, although allowed SCS-List is not configured on the first resource (which may also be understood as uplink grant), the indication information is configured on the first resource, and the first object is mapped to the first resource based on the delay information of the first object.

The communication method in embodiments of this application is described above, and the communication apparatus in embodiments of this application is described below. FIG. 7 shows an embodiment of a communication apparatus 700 in embodiments of this application. The communication apparatus 700 may implement functions of the communication apparatus (the communication apparatus is a network device or a terminal device) in the foregoing method embodiments, so that beneficial effects of the foregoing method embodiments may also be implemented. In embodiments of this application, the communication apparatus 700 may be a communication apparatus, or may be an integrated circuit or element, such as a chip, inside the communication apparatus. The communication apparatus 700 includes a transceiver unit 701 and a processing unit 702.

In a possible implementation, the communication apparatus is the terminal device in the foregoing embodiments. Functions of the units in this manner are as follows.

The transceiver unit 701 is configured to obtain configuration information, where the configuration information indicates a first resource.

The processing unit 702 is configured to map a first object to the first resource based on delay information of the first object.

Optionally, the delay information includes a remaining duration and/or a buffering duration.

Optionally, the first object includes one or more of the following types: a PDU, a PDU set, an SDU, a MAC entity, a PDCP entity, an RLC entity, an LCH, an LCG, a DRB, or a QoS flow.

Optionally, the processing unit 702 is specifically configured to perform one or more of the following:
mapping the first object to the first resource when the remaining duration of the first object is less than or equal to the first threshold;
mapping the first object to the first resource when the buffering duration of the first object is greater than or equal to the second threshold;
mapping the first object to the first resource when the remaining duration of the first object is less than or equal to the first threshold and is greater than or equal to the third threshold; or
mapping the first object to the first resource when the buffering duration of the first object is greater than or equal to the second threshold and is less than or equal to the fourth threshold.

Optionally, the first object includes a plurality of sub-objects, and the processing unit 702 is specifically configured to perform one or more of the following: mapping a sub-object satisfying a preset condition to the first resource; and
the preset condition includes one or more of the following:
a preset quantity, where the preset quantity is a preset value or is related to sorting of delay information corresponding to the plurality of sub-objects;
the remaining duration being the smallest; or
the buffering duration being the largest.

Optionally, the transceiver unit 701 is further configured to perform one or more of the following: obtaining first indication information, where the first indication information indicates that the first object is capable of using a preset threshold or a first mapping rule, the preset threshold is related to the delay information, and the first mapping rule is a rule for mapping the first object to the first resource based on the delay information.

Optionally, the first indication information includes a bit corresponding to the first object, a value of the bit is a first value or a second value, the first value corresponds to that the first object is capable of mapping the first object to the first resource based on the delay information, and the second value corresponds to that the first object is not capable of mapping the first object to the first resource based on the delay information.

Optionally, the first indication information specifically indicates an identifier of the first object.

Optionally, the transceiver unit 701 is further configured to obtain second indication information, where the second indication information indicates that a preset threshold or a second mapping rule is capable of being used, the preset threshold is related to the delay information, the second mapping rule is a rule for mapping a second object to the first resource based on the delay information, and the second object includes the first object.

Optionally, the processing unit 702 is specifically configured to map the first object to the first resource based on the delay information of the first object when the second indication information is obtained.

Optionally, the first object includes a plurality of sub-objects, and the plurality of sub-objects correspond to different preset thresholds.

Optionally, the configuration information includes one or more of the following: the first indication information, the second indication information, and the preset threshold associated with the first resource, the preset threshold includes a corresponding threshold when the delay information is the remaining duration and/or a corresponding threshold when the delay information is the buffering duration, the preset threshold associated with the first resource is related to delay information of an object associated with the first resource, and the object associated with the first resource includes the first object.

Optionally, the first object corresponds to a plurality of candidate resources, the plurality of candidate resources include the first resource and a second resource, and the preset threshold associated with the first resource and a preset threshold associated with the second resource satisfy the preset condition. For example, the preset threshold associated with the first resource is related to the delay information of the object associated with the first resource, the preset threshold associated with the second resource is related to the delay information of the object associated with the second resource, and the preset threshold includes the corresponding threshold when the delay information is the remaining duration and/or the corresponding threshold when the delay information is the buffering duration.

Optionally, the preset threshold associated with the first resource and the preset threshold associated with the second resource satisfying the preset condition includes:
a first threshold associated with the first resource being less than a first threshold associated with the second resource;
   or
a second threshold associated with the first resource being greater than a second threshold associated with the second resource.

Optionally, the first resource is further associated with the object identifier, and the object identifier includes the identifier of the first object.

Optionally, the first resource is related to delay-sensitive data and/or the first object is related to the delay-sensitive data.

In this embodiment, operations performed by the units in the communication apparatus are similar to the descriptions in the foregoing embodiments shown in FIG. 1A to FIG. 6. Details are not described herein again.

In this embodiment, the processing unit 702 may determine, through the delay information of the first object, whether to map the first object to the first resource, thereby implementing resource allocation performed on emergency service data having a high delay requirement corresponding to the first object. In addition, the processing unit 702 may also determine, through the delay information of the first object and other information (such as indication information and uplink grant), whether to map the first object to the first resource. This not only may improve flexibility of the solution, but also may adapt to an existing uplink grant process.

In another possible implementation, the communication apparatus is the network device in the foregoing embodiments. Functions of the units in this manner are as follows.

The transceiver unit 701 is configured to send configuration information, where the configuration information indicates a first resource.

The transceiver unit 701 is further configured to send indication information, where the indication information indicates to map a first object to the first resource based on delay information of the first object.

Optionally, the delay information includes a remaining duration and/or a buffering duration.

Optionally, the first object includes one or more of the following types: a PDU, a PDU set, an SDU, a MAC entity, a PDCP entity, an RLC entity, an LCH, an LCG, a DRB, or a QoS flow.

Optionally, the mapping the first object to the first resource based on the delay information of the first object includes one or more of the following:
mapping the first object to the first resource when the remaining duration of the first object is less than or equal to the first threshold;
mapping the first object to the first resource when the buffering duration of the first object is greater than or equal to the second threshold;
mapping the first object to the first resource when the remaining duration of the first object is less than or equal to the first threshold and is greater than or equal to the third threshold; or
mapping the first object to the first resource when the buffering duration of the first object is greater than or equal to the second threshold and is less than or equal to a fourth threshold.

Optionally, the first object includes a plurality of sub-objects;
the mapping a first object to the first resource based on delay information of the first object includes one or more of the following:
mapping a sub-object satisfying a preset condition to the first resource; and
the preset condition includes one or more of the following:
   a preset quantity, where the preset quantity is a preset value or is related to sorting of delay information corresponding to the plurality of sub-objects;
   the remaining duration being the smallest; or
   the buffering duration being the largest.

Optionally, the indication information specifically indicates that the first object is capable of using the preset threshold or a first mapping rule, the preset threshold is related to the delay information, and the first mapping rule is a rule for mapping the first object to the first resource based on the delay information.

Optionally, the indication information includes a bit corresponding to the first object, a value of the bit is a first value or a second value, the first value corresponds to that the first object is capable of mapping the first object to the first resource based on the delay information, and the second value corresponds to that the first object is not capable of mapping the first object to the first resource based on the delay information.

Optionally, the indication information specifically indicates an identifier of the first object.

Optionally, the indication information is specifically used for being capable of using a preset threshold or a second mapping rule, the preset threshold is related to the delay information, the second mapping rule is a rule for mapping a second object to the first resource based on the delay information, and the second object includes the first object.

Optionally, the indication information further indicates delay-sensitive data associated with the first resource.

Optionally, the first object includes a plurality of sub-objects, and the plurality of sub-objects correspond to different preset thresholds.

Optionally, the configuration information includes one or more of the following: the first indication information, the second indication information, and the preset threshold associated with the first resource, the preset threshold includes a corresponding threshold when the delay information is the remaining duration and/or a corresponding threshold when the delay information is the buffering duration, the preset threshold associated with the first resource is related to delay information of an object associated with the first resource, and the object associated with the first resource includes the first object. In this possible implementation, a parameter required in a mapping process may be indicated through the configuration information, to reduce redundant signaling overhead.

Optionally, the first object corresponds to a plurality of candidate resources, the plurality of candidate resources include the first resource and a second resource, and the preset threshold associated with the first resource and a preset threshold associated with the second resource satisfy the preset condition. For example, the preset threshold associated with the first resource is related to the delay information of the object associated with the first resource, the preset threshold associated with the second resource is related to the delay information of the object associated with the second resource, and the preset threshold includes the corresponding threshold when the delay information is the remaining duration and/or the corresponding threshold when the delay information is the buffering duration.

Optionally, the preset threshold associated with the first resource and the preset threshold associated with the second resource satisfying the preset condition includes:
a first threshold associated with the first resource being less than a first threshold associated with the second resource; or
a second threshold associated with the first resource being greater than a second threshold associated with the second resource.

Optionally, the first resource is further associated with the object identifier, and the object identifier includes the identifier of the first object.

Optionally, the first resource is related to delay-sensitive data and/or the first object is related to the delay-sensitive data.

In this embodiment, operations performed by the units in the communication apparatus are similar to the descriptions in the foregoing embodiments shown in FIG. 1A to FIG. 6. Details are not described herein again.

In this embodiment, the transceiver unit 701 may send the configuration information and the indication information, so that the terminal device may determine, through the delay information of the first object, whether to map the first object to the first resource, thereby implementing resource allocation performed on emergency service data having a high delay requirement corresponding to the first object. In addition, the terminal device may further be indicated to determine, through the delay information of the first object and other information (such as indication information and uplink grant), whether to map the first object to the first resource. This not only may improve flexibility of the solution, but also may adapt to an existing uplink grant process.

FIG. 8 is another schematic structural diagram of a communication apparatus 800 according to this application. The communication apparatus 800 includes a logic circuit 801 and an input/output interface 802. The communication apparatus 800 may be a chip or an integrated circuit.

The transceiver unit 701 shown in FIG. 7 may be a communication interface, the communication interface may be the input/output interface 802 in FIG. 8, and the input/output interface 802 may include an input interface and an output interface. Alternatively, the communication interface may be a transceiver circuit, and the transceiver circuit may include an input interface circuit and an output interface circuit. The processing unit 702 shown in FIG. 7 may be the logic circuit 801 in FIG. 8.

Optionally, the logic circuit 801 is configured to map a first object to a first resource based on delay information of the first object. The input/output interface 802 is configured to perform one or more of the following: obtain configuration information, obtain first indication information, or obtain second indication information.

The logic circuit 801 and the input/output interface 802 may further perform other steps performed by a terminal device or a network device in any one of embodiments and achieve corresponding beneficial effects. Details are not described herein again.

Optionally, the logic circuit 801 may be a processing apparatus, and a part or all of functions of the processing apparatus may be implemented by software. Functions of the processing apparatus may be partially or entirely implemented by the software.

Optionally, the processing apparatus may include a memory and a processor. The memory is configured to store a computer program. The processor reads and executes the computer program stored in the memory, to perform corresponding processing and/or steps in any one of the method embodiments.

Optionally, the processing apparatus may include only the processor. The memory configured to store the computer program is located outside the processing apparatus, and the processor is connected to the memory through a circuit/electric wire, to read and execute the computer program stored in the memory. The memory and the processor may be integrated, or may be physically independent of each other.

Optionally, the processing apparatus may be one or more chips, or one or more integrated circuits. For example, the processing apparatus may be one or more field-programmable gate arrays (field-programmable gate array, FPGA), application specific integrated circuits (application specific integrated circuit, ASIC), system on chips (system on chip, SoC), central processing units (central processor unit, CPU), network processors (network processor, NP), digital signal processing circuits (digital signal processor, DSP), micro controller units (micro controller unit, MCU), programmable controllers (programmable logic device, PLD), another integrated chip, any group of the foregoing chips or processors, or the like.

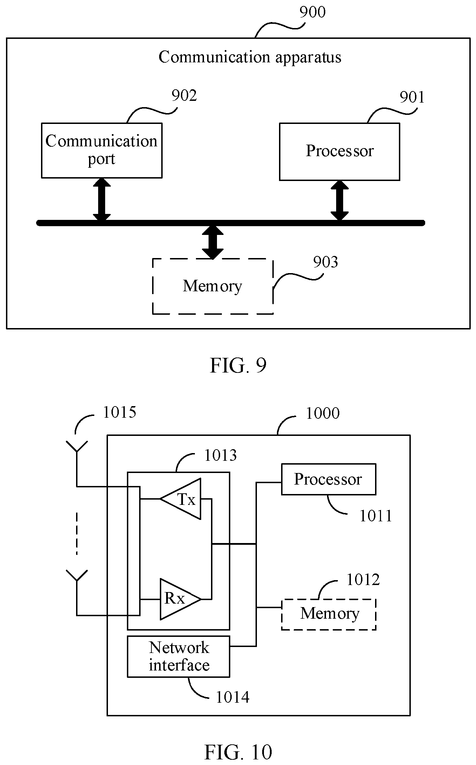

FIG. 9 shows a communication apparatus 900 related to the foregoing embodiments according to an embodiment of this application. The communication apparatus 900 may be specifically the communication apparatus used as the terminal device in the foregoing embodiments.

A diagram of a possible logical structure of the communication apparatus 900 is provided. The communication apparatus 900 may include, but is not limited to, at least one processor 901 and a communication port 902.

The transceiver unit 701 shown in FIG. 7 may be a communication interface, the communication interface may be the communication port 902 in FIG. 9, and the communication port 902 may include an input interface and an output interface. Alternatively, the communication port 902 may be a transceiver circuit, and the transceiver circuit may include an input interface circuit and an output interface circuit.

Further, optionally, the apparatus may further include at least one of a memory 903 and a bus. In this embodiment of this application, the at least one processor 901 is configured to control and process actions of the communication apparatus 900.

In addition, the processor 901 may be a central processing unit, a general purpose processor, a digital signal processor, an application specific integrated circuit, a field programmable gate array, or another programmable logic device, a transistor logic device, a hardware component, or any combination thereof. The processing module may implement or execute various examples of logical blocks, modules, and circuits described with reference to content disclosed in this application. The processor may alternatively be a combination that implements a computing function, such as a combination of one or more microprocessors, or a combination of a digital signal processor and a microprocessor. A person skilled in the art may clearly understand that, for convenience and conciseness of description, for detailed work processes of the foregoing systems, apparatuses, and units, refer to the corresponding processes in the foregoing method embodiments. Details are not described herein again.

It should be noted that, the communication apparatus 900 shown in FIG. 9 may be specifically configured to implement steps implemented by the terminal device in the foregoing method embodiments and achieve technical effects corresponding to the terminal device. For a specific implementation of the communication apparatus shown in FIG. 9, refer to descriptions in the foregoing method embodiments. Details are not described herein again.

FIG. 10 is a schematic structural diagram of a communication apparatus 1000 related to the foregoing embodiments according to an embodiment of this application. The communication apparatus 1000 may be specifically the communication apparatus used as the network device in the foregoing embodiments. For a structure of the communication apparatus, refer to the structure shown in FIG. 10.

The communication apparatus 1000 includes at least one processor 1011 and at least one network interface 1014. Further, optionally, the communication apparatus further includes at least one memory 1012, at least one transceiver 1013, and one or more antennas 1015. The processor 1011, the memory 1012, the transceiver 1013, and the network interface 1014 are connected, for example, through a bus. In this embodiment of this application, the connection may include various interfaces, transmission lines, buses, or the like. This is not limited in this embodiment. The antenna 1015 is connected to the transceiver 1013. The network interface 1014 is configured to enable the communication apparatus to communicate with another communication device through a communication link. For example, the network interface 1014 may include a network interface between the communication apparatus and a core network device, for example, an S1 interface, and the network interface may include a network interface between the communication apparatus and another communication apparatus (for example, another network device or the core network device), for example, an X2 or Xn interface.

The transceiver unit 701 shown in FIG. 7 may be a communication interface, the communication interface may be the network interface 1014 in FIG. 10, and the network interface 1014 may include an input interface and an output interface. Alternatively, the network interface 1014 may be a transceiver circuit, and the transceiver circuit may include an input interface circuit and an output interface circuit.

The processor 1011 is mainly configured to process a communication protocol and communication data, control the entire communication apparatus, execute a software program, and process data of the software program, for example, configured to support the communication apparatus to perform actions described in embodiments. The communication apparatus may include a baseband processor and a central processing unit, the baseband processor is mainly configured to process a communication protocol and communication data, and the central processing unit is mainly configured to control the entire communication apparatus, execute a software program, and process data of the software program. The processor 1011 in FIG. 10 may integrate functions of the baseband processor and the central processing unit. A person skilled in the art may understand that the baseband processor and the central processing unit may alternatively be independent processors, and may be interconnected by using a technology such as a bus. A person skilled in the art may understand that the communication apparatus may include a plurality of baseband processors to adapt to different network standards, the communication apparatus may include a plurality of central processing units to enhance a processing capability thereof, and components of the communication apparatus may be connected through various buses. The baseband processor may also be expressed as a baseband processing circuit or a baseband processing chip. The central processing unit may also be expressed as a central processing circuit or a central processing chip. A function of processing a communication protocol and communication data may be built in the processor, or may be stored in the memory in a form of the software program. The processor executes the software program to implement a baseband processing function.

The memory is configured to mainly store software programs and data. The memory 1012 may independently exist and be connected to the processor 1011. Optionally, the memory 1012 may be integrated with the processor 1011, for example, integrated into one chip. The memory 1012 can store program code for performing the technical solution of this embodiment of this application, and is controlled and executed by the processor 1011. Various types of executed computer program code may also be considered as a drive program of the processor 1011.

FIG. 10 only shows one memory and one processor. In an actual communication apparatus, a plurality of processors and a plurality of memories may exist. The memory may alternatively be referred to as a storage medium, a storage device, or the like. The memory may be a storage element on the same chip as the processor, that is, an on-chip storage element, or a stand-alone storage element. This is not limited in embodiments of this application.

The transceiver 1013 may be configured to support receiving or sending of a radio frequency signal between the communication apparatus and the terminal, and the transceiver 1013 may be connected to the antenna 1015. The transceiver 1013 includes a transmitter Tx and a receiver Rx. Specifically, the one or more antennas 1015 may receive a radio frequency signal. The receiver Rx of the transceiver 1013 is configured to receive the radio frequency signal from the antenna, convert the radio frequency signal into a digital baseband signal or a digital intermediate frequency signal, and provide the digital baseband signal or the digital intermediate frequency signal to the processor 1011, so that the processor 1011 performs further processing on the digital baseband signal or the digital intermediate frequency signal, for example, demodulation and decoding. In addition, the transmitter Tx in the transceiver 1013 is further configured to receive a modulated digital baseband signal or digital intermediate frequency signal from the processor 1011, convert the modulated digital baseband signal or digital intermediate frequency signal into the radio frequency signal, and send the radio frequency signal through the one or more antennas 1015. Specifically, the receiver Rx may selectively perform one or more stages of downmixed processing and analog-to-digital conversion processing on the radio frequency signal, to obtain the digital baseband signal or the digital intermediate frequency signal. A sequence of the downmixed processing and the analog-to-digital conversion processing is adjustable. The transmitter Tx may selectively perform one or more stages of upmixed processing and digital-to-analog conversion processing on the modulated digital baseband signal or digital intermediate frequency signal, to obtain the radio frequency signal. A sequence of the upmixed processing and the digital-to-analog conversion processing is adjustable. The digital baseband signal and the digital intermediate frequency signal may be collectively referred to as digital signals.

The transceiver 1013 may alternatively be referred to as a transceiver unit, a transceiver, a transceiver apparatus, or the like. Optionally, a component configured to implement a receiving function in the transceiver unit may be regarded as a receiving unit, and a component configured to implement a transmitting function in the transceiver unit may be regarded as a transmitting unit, that is, the transceiver unit includes a receiving unit and a transmitting unit. The receiving unit may also be referred to as a receiver, an input port, a receiving circuit, or the like, and the transmitting unit may be referred to as a transmitter, a transmitter, a transmitting circuit, or the like.

It should be noted that, the communication apparatus 1000 shown in FIG. 10 may be specifically configured to implement steps implemented by the network device in the foregoing method embodiments and achieve technical effects corresponding to the network device. For a specific implementation of the communication apparatus 1000 shown in FIG. 10, refer to descriptions in the foregoing method embodiments. Details are not described herein again.

An embodiment of this application further provides a computer-readable storage medium, where the storage medium is configured to store one or more computer executable instructions, and when the computer executable instructions are executed by a processor, the processor performs the method according to the possible implementations of the terminal device or the network device in the foregoing embodiments.

An embodiment of this application further provides a computer program product (or referred to as a computer program). When the computer program product is executed by a processor, the processor performs the method according to the foregoing possible implementations of the terminal device or the network device.

An embodiment of this application further provides a chip system. The chip system includes at least one processor, configured to support the communication apparatus to implement functions involved in possible implementations of the communication apparatus. Optionally, the chip system further includes an interface circuit, and the interface circuit provides program instructions and/or data for at least one processor. In a possible design, the chip system may further include a memory, and the memory is configured to store program instructions and data necessary for the communication apparatus. The chip system may be formed by a chip, or may include a chip and another discrete component. The communication apparatus may be specifically the terminal device or the network device in the foregoing method embodiments.

An embodiment of this application further provides a communication system, and the communication system includes the terminal device and the network device in any one of the foregoing embodiments.

An embodiment of this application further provides a communication system, and the communication system includes the terminal device and the network device in any one of the foregoing embodiments. For example, the described apparatus embodiment is merely an example. For example, unit division is merely logical function division, and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

In embodiments of this application, unless otherwise stated or there is a logic conflict, terms and/or descriptions in different embodiments are consistent and may be mutually referenced, and technical features in different embodiments may be combined based on an internal logical relationship thereof, to form new embodiments.

## Claims

1. A communication method, comprising:
obtaining configuration information, wherein the configuration information indicates a first resource; and
mapping a first object to the first resource based on delay information of the first object.

2. The method according to claim 1, wherein the delay information comprises a remaining duration and/or a buffering duration.

3. The method according to claim 1 or 2, wherein the first object comprises one or more of the following types: a protocol data unit (PDU), a PDU set, a service data unit (SDU), a media access control (MAC) entity, a packet data convergence protocol (PDCP) entity, a radio link control (RLC) entity, a logical channel (LCH), a logical channel group (LCG), a data radio bearer (DRB), or a quality of service (QoS) flow.

4. The method according to claim 2, wherein the mapping a first object to the first resource based on delay information of the first object comprises one or more of the following:
mapping the first object to the first resource when the remaining duration of the first object is less than or equal to a first threshold;
mapping the first object to the first resource when the buffering duration of the first object is greater than or equal to a second threshold;
mapping the first object to the first resource when the remaining duration of the first object is less than or equal to the first threshold and is greater than or equal to a third threshold; or
mapping the first object to the first resource when the buffering duration of the first object is greater than or equal to the second threshold and is less than or equal to a fourth threshold.

5. The method according to any one of claims 1 to 4, wherein the first object comprises a plurality of sub-objects;
the mapping a first object to the first resource based on delay information of the first object comprises one or more of the following:
mapping a sub-object satisfying a preset condition to the first resource; and
the preset condition comprises one or more of the following:
a preset quantity, wherein the preset quantity is a preset value or is related to sorting of delay information corresponding to the plurality of sub-objects;
the remaining duration being the smallest; or
the buffering duration being the largest.

6. The method according to any one of claims 1 to 5, further comprising:
obtaining first indication information, wherein the first indication information indicates that the first object is capable of using a preset threshold or a first mapping rule, the preset threshold is related to the delay information, and the first mapping rule is a rule for mapping the first object to the first resource based on the delay information.

7. The method according to claim 6, wherein the first indication information comprises a bit corresponding to the first object, a value of the bit is a first value or a second value, the first value corresponds to that the first object is capable of mapping the first object to the first resource based on the delay information, and the second value corresponds to that the first object is not capable of mapping the first object to the first resource based on the delay information.

8. The method according to claim 6, wherein the first indication information specifically indicates an identifier of the first object.

9. The method according to any one of claims 1 to 5, further comprising:
obtaining second indication information, wherein the second indication information indicates that a preset threshold or a second mapping rule is capable of being used, the preset threshold is related to the delay information, the second mapping rule is a rule for mapping a second object to the first resource based on the delay information, and the second object comprises the first object; and
the mapping a first object to the first resource based on delay information of the first object comprising:
mapping the first object to the first resource based on the delay information of the first object when the second indication information is obtained.

10. The method according to any one of claims 1 to 9, wherein the first object comprises the plurality of sub-objects, and the plurality of sub-objects correspond to different preset thresholds.

11. The method according to any one of claims 1 to 10, wherein the configuration information comprises one or more of the following: the first indication information, the second indication information, and the preset threshold, the preset threshold comprises a corresponding threshold when the delay information is the remaining duration and/or a corresponding threshold when the delay information is the buffering duration, the preset threshold associated with the first resource is related to delay information of an object associated with the first resource, and the object associated with the first resource comprises the first object.

12. The method according to any one of claims 1 to 11, wherein the first object corresponds to a plurality of candidate resources, the plurality of candidate resources comprise the first resource and a second resource, and the preset threshold associated with the first resource and a preset threshold associated with the second resource satisfy the preset condition.

13. The method according to claim 12, wherein the preset threshold associated with the first resource and the preset threshold associated with the second resource satisfying the preset condition comprises:
a first threshold associated with the first resource being less than a first threshold associated with the second resource; or
a second threshold associated with the first resource being greater than a second threshold associated with the second resource.

14. The method according to any one of claims 1 to 13, wherein the first resource is further associated with an object identifier, and the object identifier comprises the identifier of the first object.

15. The method according to any one of claims 1 to 14, wherein the first resource is related to delay-sensitive data and/or the first object is related to the delay-sensitive data.

16. A communication method, comprising:
sending configuration information, wherein the configuration information indicates a first resource; and
sending indication information, wherein the indication information indicates to map a first object to the first resource based on delay information of the first object.

17. The method according to claim 16, wherein the indication information specifically indicates that the first object is capable of using a preset threshold or a first mapping rule, the preset threshold is related to the delay information, and the first mapping rule is a rule for mapping the first object to the first resource based on the delay information.

18. The method according to claim 16 or 17, wherein the indication information is specifically used for being capable of using a preset threshold or a second mapping rule, the preset threshold is related to the delay information, the second mapping rule is a rule for mapping a second object to the first resource based on the delay information, and the second object comprises the first object.

19. The method according to any one of claims 16 to 18, wherein the indication information further indicates delay-sensitive data associated with the first resource.

20. A communication apparatus, comprising a memory, a processor, and a computer program stored in the memory and capable of running on the processor, the computer program, when executed by the processor, causing the communication apparatus to implement the method according to any one of claims 1 to 19.

21. The communication apparatus according to claim 20, wherein the communication apparatus is a terminal device, a network device, or a chip.
